(19) Europäisches Patentamt
European Patent Office
Office européen des brevets

(11) **EP 2 087 147 B1**

(12) **FASCICULE DE BREVET EUROPEEN**

(45) Date de publication et mention de la délivrance du brevet:
**23.03.2011 Bulletin 2011/12**

(21) Numéro de dépôt: **07847348.5**

(22) Date de dépôt: **26.11.2007**

(51) Int Cl.:
*C23C 18/20* $^{(2006.01)}$    *C23C 18/16* $^{(2006.01)}$
*C23C 18/34* $^{(2006.01)}$    *C23C 18/40* $^{(2006.01)}$

(86) Numéro de dépôt international:
**PCT/EP2007/062815**

(87) Numéro de publication internationale:
**WO 2008/062070 (29.05.2008 Gazette 2008/22)**

(54) **PROCEDE NON ELECTROLYTIQUE PERFECTIONNE DE METALLISATION D'UN SUBSTRAT PAR VOIE DE REDUCTION DE SEL(S) METALLIQUE(S) ET PAR PROJECTION D'AEROSOL(S)**

VERBESSERTES NICHTELEKTROLYTISCHES VERFAHREN ZUR METALLISIERUNG EINES SUBSTRATS DURCH METALLSALZREDUKTION UND AEROSOLPROJEKTION

ADVANCED NON-ELECTROLYTIC METHOD FOR METALLIZING A SUBSTRATE BY METALLIC SALT(S) REDUCTION AND AEROSOL(S) PROJECTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.11.2006 FR 0610287**

(43) Date de publication de la demande:
**12.08.2009 Bulletin 2009/33**

(73) Titulaire: **JET Metal Technologies**
**69450 St Cyr au Mont D'Or (FR)**

(72) Inventeur: **STREMSDOERFER, Samuel**
**69002 Lyon (FR)**

(74) Mandataire: **Cabinet Plasseraud**
**52, rue de la Victoire**
**75440 Paris Cedex 09 (FR)**

(56) Documents cités:
**FR-A1- 2 763 962    US-A- 4 368 221**
**US-B1- 6 268 016**

• **G. STREMSDOERFER, F. GHANEM, Y. SAIKALI, A. FARES-KARAM: "Copper deposition by Dynamic Chemical Plating" JOURNAL OF MATERIALS SCIENCE, vol. 38, 2003, pages 3285-3291, XP002442205**

**Description**

DOMAINE TECHNIQUE

Le domaine technique de l'invention est celui des traitements de surface, en particulier des traitements des revêtements de substrat ou de matériau de toute nature, notamment les non-conducteurs tels que les matières plastiques, (e.g. Acrylonitrile-Butadiène-Styrène, polypropylène), à l'aide de film métallique, mono ou multi couches et composé d'un seul métal ou d'alliage métallique.
Plus précisément, l'invention concerne un procédé non électrolytique de métallisation d'un substrat de nature quelconque, par exemple non conducteur, par projection d'aérosol contenant une solution de cation métallique oxydant et de réducteur apte à transformer ce cation en métal, pour former un film déposé à la surface du substrat à métalliser. Ce film métallique peut comporter une charge de fibres et/ou de particules et former ainsi un film composite.
De manière générale, les substrats plus spécifiquement concernés par la métallisation, sont les matériaux non conducteurs tels que les plastiques, le verre, les céramiques, le bois, les minéraux, les articles en plâtre ou en ciment et toute une foule d'autres objets non conducteurs comme les végétaux (fleurs), les insectes (papillons) ou les articles en bois sculptés...

ART ANTERIEUR - POSITION DU PROBLEME

L'une des plus anciennes applications industrielles faisant intervenir le dépôt de film métallique, est l'argenture du verre, pour la fabrication des miroirs par voie électrolytique (procédé de RUOLZ et ELKINGTON) ou chimique.
Aujourd'hui, les dépôts métalliques ont étendu leur domaine d'intérêt à des applications industrielles diverses et variées: mécanique, électronique, optique, supports magnétiques. C'est ainsi que par exemple, le blindage électromagnétique des boîtiers plastiques constituant les équipements électroniques, est une activité en pleine expansion.
A la lecture de ce qui précède, on aura compris que pour la métallisation, "par voie humide" on distingue deux grands types de technique, à savoir d'une part, les techniques électrolytiques, et d'autre part, les techniques chimiques.
S'agissant des techniques de dépôt électrolytiques en milieu liquide, on peut citer la galvanoplastie, l'électroformage, ainsi que l'électroaffinage, qui sont couramment utilisées dans l'industrie. Ces dépôts métalliques électrochimiques impliquent l'utilisation d'une source de courant extérieur. L'obtention de revêtement métallique d'épaisseur comprise entre 350 et 500 $\mu$m, nécessite plus d'une heure dans des conditions industrielles. La métallisation par voie électrolytique est donc coûteuse. Elle est également complexe car elle nécessite l'emploi d'un matériel relativement sophistiqué.
A l'inverse, les techniques de dépôt chimique s'affranchissent par définition de cette source externe de courant. La méthode la plus répandue dans ces techniques de dépôt consiste à procéder à une immersion des pièces à traiter dans un bain contenant principalement trois agents: un sel métallique, un réducteur, un complexant, qui évite la réduction spontanée et la précipitation du bain. Au contact de la surface de la pièce à métalliser, laquelle surface étant catalytique ou ayant été traitée pour devenir comme telle, la réaction d'oxydoréduction s'amorce et s'entretient d'elle-même. Cette méthode permet la fonctionnalisation de nombreux substrats, aussi bien conducteurs que diélectriques.
Les avantages liés à ces techniques de métallisation chimique par immersion, n'en occultent pas pour autant un certain nombre d'inconvénients, parmi lesquels on peut mentionner:

- les investissements importants et les problèmes techniques inhérents au traitement de pièces à métalliser de grandes dimensions;
- la nécessité de démonter les pièces à traiter;
- l'instabilité des bains de dépôt et, en particulier, des bains de dépôt composite qui permettent d'incorporer dans une matrice métallique des particules, pour donner au film une fonctionnalité particulière, la présence de telles particules en suspension dans le bain favorisant en effet la précipitation;
- une cinétique de dépôt limitée à 20 pm d'épaisseur par heure;
- la difficulté technique liée au co-dépôt simultané de différents métaux;
- spectre restreint des métaux ou alliages déposables;
- température relativement élevée de mise en oeuvre d'environ 95°C;
- impossibilité d'obtenir des dépôts localisés de revêtements métalliques;
- caractère perfectible et souvent non fiable de l'adhérence sur substrat des films métalliques déposés.

Comme indiqué ci-dessus, l'une des grandes applications de ces dépôts chimiques, est la fabrication de miroirs par argenture. Cette métallisation chimique, à l'instar des autres applications analogues qui font intervenir des substrats non conducteurs non catalytiques, comprend, de manière incontournable, des étapes préalables de sensibilisation et/ou d'activation de la surface à traiter, afin de rendre cette dernière catalytique. Classiquement, l'étape préalable de sensibilisation consiste à appliquer sur la surface à traiter, une solution de chlorure stanneux ($SnCl_2$). Cette étape de sensibilisation peut être complétée par une étape d'activation faisant intervenir une solution de chlorure de palladium ($PdCl_2$), puis enfin un rinçage avec de l'acide chlorhydrique ou de la soude.

Il est clair que l'obligation de recourir à ces étapes préalables lorsque l'on a affaire à des supports ou des substrats non catalytiques, représente une contrainte industrielle lourde, car consommatrice de temps, d'énergie et de moyens.

Le brevet US-B-5 492 613 divulgue un procédé de métallisation non électrolytique de matériaux non conducteurs (par exemple le verre) comprenant les étapes suivantes:

1. éventuelle abrasion mécanique ou chimique de la surface,
2. sensibilisation de la surface par brossage ou pulvérisation d'une solution de chlorure stanneux,
3. activation de la surface sensibilisée par brossage ou pulvérisation d'une solution aqueuse comprenant de l'$AgNO_3$, de l'ammoniaque, de l'éthanol et de l'alkylsulfonate, les ions Argent ou Palladium étant destinés à oxyder les ions $Sn^{2+}$, de manière à former un colloïde comprenant des centres de nucléation,
4. brossage ou pulvérisation en continu d'un bain de métallisation chimique classique comprenant des ions de cuivre complexés par des agents chélatant type triéthanolamine, EDTA et tartrate des réducteurs du type formol, et des tampons type $Na_2CO_3$.

Le brevet US-B1-6 268 016 décrit un procédé de métallisation de circuits imprimés par du cuivre qui contient les étapes suivantes :

1. éventuelle abrasion chimique de la surface à l'aide d'un acide fort par exemple,
2. sensibilisation/activation par dépôt d'une suspension colloïdale (Pd/Sn),
3. pulvérisation d'une solution de surfactant en vue de l'étalement du dépôt métallique,
4. détermination de la tension de surface et ajustement de la quantité de surfactant additionnée à la solution de métallisation,
5. métallisation par pulvérisation en continu d'un bain de métallisation chimique classique contenant des ions cuivre.

Les procédés décrits dans les références sus-évoquées comprennent obligatoirement une étape de sensibilisation au $SnCl_2$ et/ou une étape d'activation au $PdCl_2$ ou $AgNO_3$. Ceci est particulièrement contraignant sur le plan industriel.

Le spectre des substrats envisageables avec ces procédés connus est relativement restreint. Ces techniques ont également l'inconvénient d'être relativement complexes et onéreuses. Les films de métallisation obtenus par ces procédés sont simplement physiquement adsorbés sur la surface. Cela signifie que leurs caractéristiques d'adhésion au substrat ne sont pas fiables. En définitive, ces techniques de pulvérisation qui ont paru séduisantes au premier abord, se sont avérées décevantes, en ce qui concerne le coût et la qualité des revêtements métalliques obtenus, de même qu'en ce qui concerne la simplicité de mise en oeuvre et le spectre de substrats traitables.

En outre, les documents antérieurs relatifs à la métallisation par pulvérisation d'aérosols oxydants/réducteurs, sont limités à l'argent et à l'or. De plus, compte tenu de leurs défauts de base, elles ne peuvent être qu'une étape intermédiaire dans la métallisation d'un substrat et non une technique de métallisation en soi. En outre, elles ne permettent pas d'envisager la réalisation de dépôts à base d'alliages métalliques ou de dépôts de revêtements métalliques composite. De plus, les épaisseurs d'argent sont très limitées (maximum de 0,15 $\mu$m) et cinétiquement très lentes.

Pour remédier à ces inconvénients, il a été proposé dans le brevet FR-B-2763962 un procédé de métallisation chimique par projection d'aérosol(s) oxydant/réducteur (Ox/Red), dans lequel on effectue la projection selon une ou plusieurs séquences judicieusement choisies de phases de projection et de phases de relaxation de durées spécifiques, en faisant en sorte que le rapport électronique Ox/Red dans la masse liquide projetée par aérosol sur le substrat, soit compris dans un intervalle donné.

Ce procédé non-électrolytique de métallisation d'un substrat, par projection d'au moins un aérosol contenant au moins un métal sous forme cationique (oxydant) et au moins un réducteur, apte à transformer le cation métallique en métal, est caractérisé en ce qu'il consiste essentiellement à:

- a- éventuellement sensibiliser et/ou activer la surface du substrat à métalliser,
- b- effectuer la projection selon une succession d'au moins deux phases de projection, en alternance avec des phases de relaxation:

(i) en fixant la durée des phases de projection entre $10^{-2}$ et 5 s, de préférence entre $10^{-1}$ et 3 s pour une même unité de surface, et la durée des phases de relaxation entre 1 x $10^{-2}$ et 10 s, de préférence entre 2 x $10^{-1}$ et 4 s pour une même unité de surface, les durées de ces phases de projection et de relaxation étant identiques ou différentes entre elles,

(ii) et en ajustant le(s) débit(s) de projection, de telle sorte que le rapport électronique Ox/Red soit compris entre 0,01 et 15, de préférence entre 0,5 et 8, et permettre ainsi la formation d'un film métallique chimiquement adhérent au substrat;

- c- à interrompre la projection dès lors que le taux de dépôt de métal visé est atteint.

Ce procédé présente notamment les avantages suivants:

i) il est applicable à une multiplicité de substrats conducteurs ou non-conducteurs,

ii) le spectre des métaux ou alliages déposables est très large,

iii) il est simple à mettre en oeuvre et il est économique,

iv) les solutions utilisées sont stables,

v) l'épaisseur du dépôt est facilement contrôlable,

vi) il est possible de réaliser des alliages ou des revêtements composites,

vii) les niveaux d'adhérence du film métallique par rapport au substrat, sont tout à fait satisfaisants,

viii) les étapes préalables de sensibilisation et/ou d'activation ne sont pas absolument nécessaires.

PROBLEME A RESOUDRE - OBJECTIFS

L'un des objectifs essentiels de la présente invention est de perfectionner le procédé de métallisation chimique par projection d'aérosol(s) oxydant/réducteur (Ox/Red) selon le brevet FR-B-2 763 962.

Les améliorations recherchées se situent notamment dans au moins l'un des domaines suivants:

→ industrialisation et automatisation du procédé;

→ favoriser le mélange des substances actives (oxydant et réducteur);

→ homogénéité et régularité de surface et d'épaisseur du mélange projeté susévoqué;

→ augmentation de la dureté des dépôts;

→ diminution de la consommation des matières premières;

→ optimisation de l'économie de la métallisation par recyclage des sous-produits.

BREVE DESCRIPTION DE L'INVENTION

Cet objectif, parmi d'autres, est atteint par la présente invention qui concerne, en premier lieu, un procédé non-électrolytique perfectionné de métallisation d'au moins une partie de la surface d'un substrat (ci-après dénommée surface à métalliser), par projection à l'aide de moyens adaptés d'au moins un aérosol aqueux et/ou organique contenant au moins un métal sous forme cationique (oxydant) et au moins un réducteur, apte à transformer le cation métallique en métal, du type de ceux consistant essentiellement à: - a - éventuellement sensibiliser et/ou activer la surface à métalliser, - b - effectuer la projection de métallisation selon une succession d'au moins deux phases de projection, en alternance avec des phases de relaxation: (i) en fixant la durée Dp des phases de projection entre $10^{-2}$ et 5 s, de préférence entre $10^{-1}$ et 3 s pour une même unité de surface, et la durée Dr des phases de relaxation entre $10^{-2}$ et 10 s, de préférence entre $2 \times 10^{-1}$ et 4 s pour une même unité de surface, les durées Dp et Dr de ces phases de projection et de relaxation étant identiques ou différentes entre elles, (ii) et en ajustant le(s) débit(s) de projection, de telle sorte que le rapport électronique Ox / Red soit compris entre 0,01 et 15, de préférence entre 0,5 et 8, et permette ainsi la formation d'un film métallique chimiquement adhérent au substrat; -c- à interrompre la projection dès lors que le taux de dépôt de métal visé est atteint,

le perfectionnement consistant notamment en ce qu'il est prévu :

➢ de mettre en oeuvre au moins une étape préalable -$a_p$- de mouillage du substrat consistant à mettre ce dernier en contact avec au moins un fluide de mouillage, de manière à former sur au moins une partie de sa surface un film liquide;

➢ et, à la suite du mouillage -$a_p$-, de commencer la projection selon l'étape -b- au plus tard 60 s, de préférence au plus tard 40 s, et, plus préférentiellement encore, au plus tard 20s après la fin du mouillage.

Les durées Dp et Dr respectivement de projection et de relaxation sont définies à partir d'une constante k de métallisation intrinsèque à chaque métal telle que k = Dp+Dr, la constante k étant de préférence comprise entre $10^{-1}$ et 13 s et plus préférentiellement encore entre 0,5 et 9 s.

De préférence, le perfectionnement présente également les caractéristiques suivantes:

➤ au moins une partie de la projection de métallisation est effectuée de manière dynamique en déplaçant les moyens de projection par rapport au substrat de manière à effectuer un balayage périodique d'au moins 80 %, de préférence d'au moins 90 %, et, plus préférentiellement encore d'au moins 95 % de la surface à métalliser;
➤ pour une unité de surface donnée et comprise dans la zone de balayage :

○ la phase de projection a une durée Dp correspondant à la durée pendant laquelle l'unité de surface considérée est soumise à la projection, de préférence continue, de l'aérosol,
○ la phase de relaxation qui suit cette phase de projection a une durée Dr correspondant à la durée du balayage du reste de la surface à métalliser par les moyens de projection ou correspondant à la durée pendant laquelle le substrat n'est pas soumis à la projection,
○ le déplacement des moyens de projection est défini de telle sorte que :

➤ lesdits moyens de projection se déplacent selon une trajectoire $T_{OA}$ entre un point d'origine (O) et un point d'arrivée (A) à une vitesse de déplacement en projection $V_{OA}$,
○ dès lors que les moyens de projection atteignent le point (A), ils regagnent le point (O) à une vitesse $V_{AO}$ de déplacement sans projection selon une trajectoire $T_{AO}$;
$V_{AO}$ étant calculée en tenant compte de la distance entre (A) et (O) et de $V_{OA}$, pour que la durée Dr de la phase de relaxation de chaque unité de surface de la surface à métalliser balayée par les moyens de projection, soit telle que définie ci-dessus, ce calcul étant de préférence réalisé par une unité de calcul et de commande UCC (de préférence un micro-ordinateur) à laquelle sont asservis les moyens de projection et un système de déplacement desdits moyens de projection;

➤ éventuellement, pendant au moins une partie de la projection de métallisation, le substrat est mis en rotation.

Dans une variante, le perfectionnement présente les caractéristiques suivantes:

• au moins une partie de la projection de métallisation est effectuée de manière dynamique en déplaçant les moyens de projection par rapport au substrat et/ou en déplaçant le substrat par rapport aux moyens de projection de manière à effectuer un balayage périodique d'au moins 80 %, de préférence d'au moins 90 %, et, plus préférentiellement encore d'au moins 95 % de la surface à métalliser;
• pour une unité de surface donnée et comprise dans la zone de balayage:

➤ la phase de projection a une durée Dp correspondant à la durée pendant laquelle l'unité de surface considérée est soumise à la projection, de préférence continue, de l'aérosol,

➤ la phase de relaxation qui suit cette phase de projection a une durée Dr correspondant à la durée du balayage du reste de la surface à métalliser par les moyens de projection.

• le déplacement du substrat par rapport aux moyens de projection étant de préférence une rotation.

Le perfectionnement selon l'invention confère au procédé de métallisation qu'elle concerne, une dimension industrielle (stade pilote et plus grande échelle), tout en améliorant la qualité des dépôts métalliques sur de grandes surfaces, en termes de régularité et de dureté des couches métalliques déposées, mais également au regard du contrôle et de la reproductibilité des propriétés desdites couches métalliques déposées, entre autres. Ces avancées technologiques sont acquises sans nuire aux avantages du procédé de métallisation selon le brevet FR-B-2 763 962, à savoir notamment les avantages i) à viii). Ces derniers peuvent même être améliorés dans certains cas énoncés ci-dessus.

Le procédé perfectionné de métallisation selon l'invention permet également d'obtenir des couches métalliques dont la résistivité est abaissée (meilleure conduction). Sans vouloir être lié par la théorie ceci peut s'expliquer du fait que l'oxydation des couches est moindre, et ce en raison de la meilleure gestion qu'offre l'invention s'agissant des apports en solutions chimiques consommées (Ox/Red).

La présente invention vise en second lieu un dispositif pour la mise en oeuvre du procédé perfectionné de métallisation non-électrolytique selon l'invention caractérisé en ce qu'il comprend:

➤des moyens de maintien du substrat à métalliser, éventuellement équipés de moyens de mise en rotation du substrat;
➤ des moyens de mouillage préalable du substrat;

➢ des moyens de projection du métal sous forme cationique (oxydant) et du réducteur,

➢ d'éventuels moyens de rinçage;

➢ un système de déplacement des moyens de projection, voire des moyens de mouillage et/ou des moyens de rinçage;

➢ et au moins une unité de calcul et de commande UCC (de préférence un micro-ordinateur) à laquelle sont asservis les moyens de projection et le système de déplacement desdits moyens de projection.

## DESCRIPTION DETAILLEE DE L'INVENTION

Le procédé perfectionné selon l'invention présente l'avantage d'être applicable à une multiplicité de substrats conducteurs ou non-conducteurs, parmi lesquels on peut citer les métaux tels que le cuivre, l'aluminium non anodisé, l'acier doux, le fer, le nickel, le magnésium, le titane et les alliages métalliques comme le laiton, le bronze, les aciers inox ou les plastiques tels que l'ABS, le PVC, les polycarbonates, les polypropylènes, les polyméthacrylates de méthyle, les résines époxy, le verre, les céramiques, les polymères semi-cristallins, le bois, les polyesters.

De la même façon, le spectre des métaux ou alliages déposables est très large. S'agissant des métaux, ceux-ci peuvent être avantageusement sélectionnés dans le groupe VIII de la classification ainsi que parmi les groupes Ib, IIb, IIIa, IVa (métaux de transition) et VI b de la classification. A titre d'exemple, on peut citer le cuivre, le nickel, le zinc, le cobalt, l'étain, le bore, le tungstène et leurs alliages. Différents alliages binaires et tertiaires à base de Ni, Co, Zn, Fe, Cu et B sont réalisables en utilisant un mélange de sels métalliques. A titre d'exemples d'alliages, on peut citer: Ni-B, Ni-B-Zn, Ni-Cu-B, Ni-Co-B, Ni-Fe-B, Ni-Cu-Co-B, NiSn-B...

Ce procédé perfectionné a également pour lui sa simplicité de mise en oeuvre et son faible coût. Il permet de métalliser les pièces de très grandes dimensions sans investissement important. L'infrastructure nécessaire à la mise en oeuvre de ce procédé est légère, donc peu coûteuse, et réutilisable quelles que soient les solutions d'oxydants et de réducteurs employées.

Il permet d'obtenir des dépôts localisés en projetant les réactifs, comme pour une peinture, au travers d'un masque définissant des formes géométriques en deux dimensions, ou en projetant directement sur l'objet préalablement masqué. Il est également possible de ne recouvrir qu'une seule face d'un objet afin d'éviter l'opération de masquage de l'autre face. La stabilité des solutions utilisées est un atout certain dans un contexte industriel. L'épaisseur du dépôt est facilement contrôlable. Il est possible de réaliser des alliages ou des revêtements composites, c'est-à-dire des multicouches dans lesquels sont superposées en alternance des couches d'au moins deux métaux différents.

Les niveaux d'adhérence du film métallique par rapport au substrat, sont tout à fait satisfaisants. Il est d'ailleurs à noter à cet égard que le film métallique obtenu selon ce procédé, est adsorbé chimiquement sur la surface du substrat. C'est un élément qui est déterminant au regard de l'adhérence et qui est, par ailleurs, parfaitement distinctif par rapport aux dépôts selon l'état de la technique. Il est à noter que les étapes préalables de sensibilisation et/ou d'activation ne sont pas absolument nécessaires, comme c'était le cas auparavant pour les substrats non catalytiques. En effet, pour les substrats non-catalytiques, on prévoit, conformément à l'invention, de mettre en oeuvre l'étape a et/ou de réaliser une activation in situ consistant à incorporer dans l'aérosol ou les aérosols de projection au moins un agent d'accrochage ou de couplage, agissant comme modificateur de surface et permettant d'améliorer l'adhérence des films métalliques sur les substrats non-catalytiques tels que les plastiques et/ou de catalyser la réaction à la surface. Cette variante simplificatrice sera exposée plus en détail ci-après.

Conformément à l'invention, il est apparu opportun de contrôler la température de l'enceinte de métallisation. A titre d'exemple, cette température de l'enceinte peut être comprise entre 20 et 60° C.

La régulation de la température de l'enceinte de métallisation s'obtient de manière aisée à l'aide de tous matériels de conditionnement d'air approprié.

Les étapes facultatives - a - de sensibilisation et/ou activation préalables sont réalisées, de manière connue en soi, par application (e.g. pulvérisation, immersion) de solutés de chlorure stanneux ($SnCl_2$) ou d'une solution de $SnSO_4$/$H_2SO_4$/quinol/alcool suivies d'une application (pulvérisation ou immersion) d'une solution de palladium ou d'argent apte à réagir avec le $Sn^{2+}$ pour former des centres de nucléation à la surface du substrat, ou bien encore d'une solution colloïdale PdSn formée ex situ. Pour plus de précision, on pourra se référer par exemple à "Metal Finishing Guidebook and Directory Issue", 1996 Metal Finishing publication, page 354, 356 et 357. H. Narcus "Metallizing of Plastics ", Reinhold Publishing Corporation, 1960, Chapitre 2, page 21. F. Lowenheim, "Modern electroplating", John Wiley & Sons publication, 1974 Chapitre 28, page 636.

L'un des éléments du perfectionnement selon l'invention repose sur l'étape préalable -$a_p$- de mouillage du substrat de manière à former un film liquide sur celui-ci, sachant que la projection selon l'étape -b- est initiée avantageusement lorsque le film liquide généré par le mouillage est encore présent à la surface du substrat. En d'autres termes, on tire avantage à ce que la projection selon l'étape -b- commence au plus tard 60 secondes, de préférence au plus tard 40 secondes, et plus préférentiellement encore, au plus tard 20 secondes après la fin du mouillage.

Au sens de la présente invention, on entend par exemple par l'expression "fin du mouillage", le moment où on interrompt définitivement la mise en contact de tout ou partie de la surface du substrat avec au moins une source de fluide (liquide ou vapeurs) de mouillage.

La présence de ce film généré par le mouillage, de préférence en combinaison avec la mise en mouvement du substrat, permet d'assurer un dépôt homogène de la couche métallique, en favorisant le mélange des deux substances actives (oxydant et réducteur) projetées simultanément ainsi que l'étalement du mélange.

Avantageusement, l'étape préalable -a$_p$- de mouillage, c'est-à-dire la mise en contact de tout ou partie de la "surface du substrat avec au moins une source de fluide (liquide ou vapeurs) de mouillage, est réalisée par projection d'un aérosol de liquide de mouillage et/ou par immersion dans un bain de liquide de mouillage, ledit liquide de mouillage étant éventuellement chauffé, et/ou par projection sur le substrat de vapeurs de liquide de mouillage, lesquelles condensent sur la surface dudit substrat.

Le chauffage du liquide de mouillage, tout comme le contrôle de la température de l'enceinte de métallisation, sont des modalités intéressantes pour catalyser la cinétique de dépôt au démarrage de l'étape -b- de projection de l'aérosol oxydant/réducteur. A titre d'exemple, la température de chauffage du liquide de mouillage peut être par exemple comprise entre 20°C et 60°C.

Le choix du liquide de mouillage s'effectue préférablement dans le groupe comprenant : l'eau déionisée ou non, éventuellement additionnée avec au moins un tensioactif anionique, cationique ou neutre, une solution alcoolique comprenant au moins un alcool (par exemple l'isopropanol ou l'éthanol) et leurs mélanges.

Dans la variante de mouillage selon laquelle on transforme le liquide de mouillage en vapeurs que l'on projette sur le substrat sur lequel elles condensent, il est préférable que le liquide soit essentiellement aqueux pour des raisons évidentes de convenance industrielle.

Comme on l'a compris, la durée du mouillage n'est pas un paramètre primordial du perfectionnement selon l'invention. Cette durée de mouillage dépend de la surface du substrat considéré, de la technique choisie projection ou immersion, et dans le cas du mouillage par projection, du débit de projection de l'aérosol de mouillage.

Les moyens pour effectuer la projection d'un aérosol ou de vapeurs de liquide de mouillage pour cette étape préalable -a$_p$- peuvent être identiques ou différents de ceux utilisés pour la projection de l'aérosol d'oxydant/réducteur. De préférence, ces moyens de projection sont différents. Il est possible d'avoir recours par exemple à un pistolet monobuse pneumatique indépendant.

Avantageusement, l'UCC peut commander et contrôler également la réalisation de l'étape préalable -a$_p$- de mouillage notamment en actionnant la projection de l'aérosol ou de vapeurs de liquide de mouillage et le déplacement les moyens de projection correspondant.

Au-delà de cet aspect mouillage, le perfectionnement selon l'invention consiste en partie en un mode de fonctionnement dynamique lors des phases de projection et de relaxation. Ce mode dynamique concerne, d'une part, les moyens de projection et, d'autre part, de manière facultative mais néanmoins avantageuse, le substrat lui-même. Ainsi, selon cette dernière variante facultative, le substrat peut être mis en rotation au moins partielle au cours de la projection de métallisation (étape -b-). Le substrat est mis en rotation pendant l'étape -b-, de préférence de façon intermittente, à une vitesse comprise entre 1 et 30 tr/min, de préférence entre 5 et 20 tr/min. L'axe de rotation du substrat peut être quelconque. Par exemple, dans le cas où les moyens de projection ont une trajectoire rectiligne, l'axe de rotation du substrat peut être sensiblement orthogonal à l'axe de déplacement des moyens de projection. La rotation du substrat peut s'envisager sur une section angulaire limitée. Ainsi, lorsque le substrat présente une forme générale plane, sa rotation peut s'effectuer sur un angle compris de préférence entre 1 et 120° et correspondant par exemple à 45°.

Cette rotation du substrat peut être intermittente au cours des phases de projection/relaxation.

En pratique, l'axe de rotation du substrat passe ou non par le centre de gravité dudit substrat.

La vitesse de rotation du substrat peut varier entre 1 et 20 tours par seconde, par exemple de l'ordre de 10 $\pm$ 2 tours par seconde.

Conformément au perfectionnement selon l'invention, la projection de métallisation est effectuée sur un mode dynamique.

Ainsi, les moyens de projection balayent la surface à métalliser du substrat tout en projetant, de préférence de manière continue, l'aérosol oxydant/réducteur.

De préférence, le balayage couvre la totalité de la surface à métalliser.

Ce balayage est périodique, c'est-à-dire lorsque les moyens de projection ont parcouru la trajectoire $T_{OA}$ entre le point d'origine O et le point d'arrivée A à une vitesse de déplacement en projection $V_{OA}$, ils regagnent le point d'origine O à une vitesse $V_{AO}$ de déplacement sans projection, selon une trajectoire $T_{AO}$.

Suivant un mode préféré de mise en oeuvre du procédé perfectionné selon l'invention, l'étape -b- est cyclique, , chaque cycle comprenant une phase de projection et une phase de relaxation, ce qui correspond à un aller/retour des moyens de projection entre O et A et, par ailleurs, le nombre total de N cycles mis en oeuvre est choisi en fonction du taux de dépôt de métal visé au final et du taux de dépôt de métal obtenu à chaque cycle, ce nombre total de N cycles étant compris entre 2 et 5000, de préférence entre 50 et 500, plus préférentiellement encore entre 80 et 200.

Le taux de dépôt de métal final et le taux de dépôt de métal par cycle sont des paramètres qui dépendent notamment des débits de projection et de la vitesse de déplacement en projection $V_{OA}$.

Selon une caractéristique avantageuse, les débits de projection dans l'étape -b-, sont ajustés de telle sorte que, au terme de chaque phase de projection, les quantités en cation(s) métallique(s) (oxydant) et en réducteur(s) par $cm^2$ de surface à métalliser soient les suivantes (en $mg/cm^2$):

- de 0,1 à 60, de préférence de 0,5 à 20 pour l'oxydant,
- de 0,1 à 60, de préférence de 0,5 à 20 pour le réducteur.

Dans le cas particulier où l'oxydant est du nickel de degré d'oxydation II, ce dernier est présent à raison de 1 à 7 $mg/cm^2$, tandis que le réducteur est présent sur la surface du substrat à raison de 1 à 14 $mg/cm^2$, au terme de chaque phase de projection.

Pour ce qui concerne la vitesse $V_{OA}$ de déplacement en projection, elle est choisie en fonction du type de métal. En effet, certain métaux nécessitent une projection plus longue donc une vitesse $V_{OA}$ de déplacement en projection plus lente.

Pour fixer les idées dans le cas où la trajectoire $T_{OA}$ est rectiligne et directe, cette vitesse $V_{OA}$ de déplacement en projection est par exemple comprise entre 0,01 à 10 m/s, de préférence entre 0,5 et 2 m/s, voire plus précisément e. g. de l'ordre de 1 m/s.

Naturellement, l'invention n'est pas limitée au cas où la trajectoire $T_{OA}$ est rectiligne et directe. Ainsi, il est envisageable que pour des pièces tridimensionnelles (de forme générale non plane), cette trajectoire $T_{OA}$ soit également tridimensionnelle, par exemple hélicoïdale, pour balayer l'ensemble de la surface à métalliser du substrat concerné.

S'agissant de la trajectoire de retour $T_{AO}$, il est prévu, conformément au perfectionnement selon l'invention, que la vitesse de retour $V_{AO}$ sur cette trajectoire $T_{AO}$, soit telle que, pour chaque unité de surface de la surface à métalliser et pour chaque cycle, la phase de relaxation réponde aux spécifications de durée Dr comprise entre $10^{-2}$ et 10s, de préférence entre $2.10^{-2}$ et 4s.

Les durées de projection et de relaxation sont définies par une constante k variant suivant le type de métal entre $10^{-1}$ à 13 s de préférence entre 0,5 et 9s.

Il convient donc de programmer l'unité de calcul et de commande UCC, de telle sorte que cette dernière détermine et commande le déplacement retour des moyens de projection du point d'arrivée A jusqu'au point d'origine O, à une vitesse $V_{AO}$. Pour cela, l'UCC agit sur les moyens de projection pour les mettre à l'arrêt dès lors que le point d'arrivée A est atteint et agit par ailleurs sur le système de déplacement desdits moyens de projection pour les ramener à l'état inactif à leur point d'origine.

Dans un mode de mise en oeuvre particulier selon lequel la trajectoire $T_{AO}$ est rectiligne et directe, la formule de calcul de $V_{AO}$ est la suivante :

$$V_{AO} = AO / [k - (OA / V_{OA})]$$

Avantageusement, l'UCC est programmée pour commander également la mise en marche des moyens de projection ainsi que leur déplacement sur la trajectoire $T_{OA}$ "aller" à une vitesse $V_{OA}$ qui peut être, par exemple, comprise entre 0,1 et 20m/s, de préférence entre 1 et 6m/s.

D'une manière plus générale, la vitesse $V_{OA}$ peut être, par exemple, comprise entre 0,01 et 20m/s, de préférence entre 0,1 et 6m/s.

Selon une disposition intéressante de l'invention, on prévoit au moins une phase de rinçage, de préférence, après chaque séquence $\Delta S$ de n cycles projection/relaxation. Avantageusement, le nombre n de cycles projection/relaxation de chaque séquence $\Delta S$, est compris par exemple entre 2 et 30, de préférence entre 5 et 20.

Avantageusement, l'étape de rinçage, c'est-à-dire la mise en contact de tout ou partie de la surface du substrat avec au moins une source de liquide de rinçage, est réalisée par projection d'un aérosol de liquide de rinçage et/ou par immersion dans un bain de liquide de rinçage. Les moyens pour effectuer la projection d'un aérosol de liquide de rinçage pour peuvent être identiques ou différents de ceux utilisés pour la projection de l'aérosol d'oxydant/réducteur et/ou de ceux mis en oeuvre pour l'étape préalable -$a_p$- de mouillage. De préférence, ces moyens de projection sont différents des moyens utilisés pour la projection de l'aérosol d'oxydant/réducteur et sont les mêmes que ceux de mouillage, qui peuvent être par exemple, un pistolet monobuse pneumatique indépendant.

A l'instar des moyens de projection de l'aérosol de mouillage, les moyens de projection du liquide de rinçage sont préférablement associés à un système de déplacement desdits moyens.

Selon une modalité intéressante de la présente invention, l'UCC peut commander et contrôler également la réalisation de l'étape de rinçage notamment en actionnant la projection de l'aérosol de liquide de rinçage et le déplacement les moyens de projection correspondant.

Les aérosols projetés sur le substrat dans le procédé selon l'invention, sont de préférence obtenus:

- à partir de solutions, avantageusement aqueuses, du ou des cations métalliques oxydants, du ou des réducteurs,
- ou à partir de solutions de rinçage,
- ou bien encore le cas échéant, à partir de solutions de sensibilisation et/ou d'activation.

Il s'ensuit que selon une disposition préférée de l'invention, on réalise l'(ou les) aérosol(s) de projection par nébulisation et/ou atomisation de solution(s) et/ou de dispersion(s), de manière à obtenir un brouillard de gouttelettes de taille inférieure à 100 $\mu$m, de préférence à 60 $\mu$m, et plus préférentiellement encore comprise entre 0,1 et 50 $\mu$m.

Suivant une première possibilité de mise en oeuvre du procédé perfectionné de l'invention, on projette simultanément sur la surface, dans un ou plusieurs aérosols, au moins une solution de cation(s) métallique(s) et au moins une solution de réducteur(s) et ce, dans une même phase de projection. Dans ce cas de figure, le mélange entre la solution oxydante et la solution réductrice peut 5 effectuer juste avant la formation de l'aérosol de projection ou bien encore par fusion d'un aérosol produit à partir de la solution oxydante et d'un aérosol produit à partir de la solution réductrice, de préférence, avant l'entrée en contact avec la surface du substrat métallisé.

Conformément à une deuxième possibilité de mise en oeuvre du procédé perfectionné suivant l'invention, l'étape b consiste à projeter, lors de chaque phase de projection, et par l'intermédiaire d'un ou plusieurs aérosols, au moins une solution de cation(s) métallique(s) ou au moins une solution de réducteur(s), sachant qu'il est prévu au moins une phase de projection exclusive de cation métallique oxydant et au moins une phase de projection exclusive de réducteur, les phases de projection de l'oxydant, d'une part, et du réducteur, d'autre part, intervenant, de préférence, en alternance. Cette deuxième possibilité correspond à une projection alternée de la ou des solutions réductrices et du ou des sels métalliques.

Il est à noter que les durées des phases de relaxation peuvent être identiques ou différentes entre elles. Il en va de même pour les phases de projection, ainsi que toutes les phases ensemble.

En pratique, selon cette deuxième possibilité, il est prévu une ou plusieurs séquences $\Delta$S" de n" cycles de projection/relaxation dans lesquelles les cycles de projection/relaxation du réducteur alternent avec les cycles de projection/relaxation du sel métallique oxydant. Le nombre total N" de ces cycles de projection/relaxation dépend de la surface à métalliser et de l'épaisseur visée pour la couche de métallisation. Ce nombre N" peut, par exemple, être compris entre 4 et 5000, de préférence entre 50 et 500, plus préférentiellement encore entre 80 et 200.

Dans les deux possibilités de mise en oeuvre décrites ci-dessus, il est possible d'avoir recours, selon une variante, à plusieurs cations métalliques oxydants différents et à un ou plusieurs réducteurs, de façon à réaliser un multicouche de métaux ou d'alliages différents. Pour ce faire, on effectue différentes sous-séquences $\Delta$s de m cycles projection/relaxation successifs, chacune de ces sous-séquences correspondant à un métal ou à un alliage donné, destiné à former une couche de métallisation. m est supérieur ou égal à 2 et de préférence compris entre 2 et 10 dans la première possibilité de mise en oeuvre et m est supérieur ou égal à 4 de préférence compris entre 4 et 20 dans la deuxième possibilité de mise en oeuvre. Ces sous-séquences sont de durée identique ou différente et comprennent et/ou sont séparées les unes des autres par une ou plusieurs phases de rinçage. En pratique, on préférera prévoir au moins un rinçage entre deux sous-séquences correspondant à des métaux ou des alliages différents, c'est à dire après chaque sous-séquence $\Delta$s de m cycles projection/relaxation; m étant compris entre 2 et 30, de préférence entre 5 et 20.

Dans le cadre de la deuxième possibilité de mise en oeuvre, l'association de plusieurs cations métalliques oxydants pour former un multicouche de métaux ou d'alliages différents, est telle que les différents sels sont, de préférence, projetés naturellement séparément du réducteur mais également séparément les uns des autres et successivement. Il va de soi qu'outre la nature différente des cations métalliques, il est envisageable d'utiliser des contre-anions différents entre eux.

Pour permettre la mise en oeuvre de l'étape - c -, on suit la croissance du revêtement métallique déposé de préférence au travers de l'évolution du poids, par exemple à l'aide d'une balance à quartz équipée d'une sonde soumise à la projection de la même façon que la surface à métalliser.

Selon une autre variante de l'invention, on fait en sorte que le mélange du ou des oxydants et du ou des réducteurs soit métastable et, après projection du mélange, on active ce dernier de sorte que se déclenche la transformation en métal, de préférence par mise en contact avec un amorceur, avantageusement amené par l'intermédiaire d'au moins un aérosol, avant, pendant ou après la projection du mélange réactionnel. Cette variante permet de prémélanger l'oxydant et le réducteur tout en retardant leur réaction jusqu'à ce qu'ils tapissent la surface du substrat après projection. L'amorçage ou l'activation de la réaction est ensuite obtenu par tout moyen physique (température, UV...) ou chimique.

Au-delà des considérations méthodologiques présentées ci-dessus et illustrées ci-après dans les exemples, il importe désormais de donner quelques informations plus précises quant aux produits mis en oeuvre dans le procédé selon l'invention.

L'eau apparaît comme étant le solvant le mieux adapté, sans exclure toutefois la possibilité d'utiliser des solvants organiques, pour la production des solutions à partir desquels seront produits les aérosols projetés. Les concentrations en sel métallique oxydant sont comprises entre lg/l et 60g/l et de préférence entre 7 et 30 g/l.

La sélection des réducteurs est faite de préférence dans le groupe de produits suivants: borohydrures de sodium, dimnéthylarnineborane, hydrazine, hypophosphite de sodium, formol, Aluminohydures de Lithium, les sucres réducteurs et leurs mélanges. La sélection du réducteur impose de tenir compte du pH et des propriétés visées pour le film de métallisation. Ces tâtonnements de routine sont à la portée de l'homme du métier. Les concentrations en réducteur sont comprises entre 0,5 g/l et 60 g/l et de préférence entre 8 et 20g/l.

Comme déjà expliqué ci-dessus, les solutions aqueuses constituent la base la plus commode pour la production d'aérosols de projection oxydant/réducteur. Selon une disposition préférée, on peut prévoir d'adjoindre à au moins l'une des solutions de départ:

- et/ou au moins une résine ou liant naturel ou de synthèse,
- et/ou au moins un colorant et/ou pigment organique ou inorganique,
- au moins un agent d'accrochage (ou de couplage), de préférence choisi parmi les produits suivants: titanates, aluminates, silanes, zirconates, zircoaluminates ou leurs mélanges;
- et/ou au moins un brillanteur, de préférence sélectionné parmi les produits suivants:

    sulfimides, sulfanamides, sulfonates, alcool propargylique, thiourée,
    mercaptabenzothiazole ou leurs mélanges;

- et/ou au moins un tensioactif;
- et/ou au moins une charge, de préférence sélectionné parmi les produits suivants:

    * fibres ou particules de verre, de carbone, de Téflon, de carbure de silicium, de graphite, de diamant, d'oxydes tels que l'alumine, de céramiques,
    * microcapsules contenant du lubrifiant,
    * ou bien encore carbonates de calcium ou de sodium, sulfates de baryum, talc, silicates,
    * en fait toute charge capable de modifier les propriétés rhéologiques et les propriétés mécaniques des films métalliques,
    * et les mélanges de ces produits.

Les agents d'accrochage agissent comme des modificateurs de surface grâce à leurs capacités à s'hydrolyser en milieu aqueux pour donner naissance à un film amorphe et inorganique, chimisorbé à la surface qui sert de " primaire " pour la surface et éventuellement de catalyseur pour la réaction.

A titre de classe de produits préférés pour la sélection de ces modificateurs de surface, on se référera aux: titanates, aluminates, silanes, zirconates, zircoaluminates.

Les titanates sont particulièrement appropriés. L'avantage de cette activation par les titanates ou analogues est qu'elle se déroule in situ sans qu'il soit nécessaire de prévoir une étape d'activation préalable à la projection de l'oxydant du réducteur. Les propriétés du film de titanate dépendent de la quantité utilisée. La performance est maximale quant la surface à modifier contient des groupements fonctionnels (cétone, amine, époxy...). L'emploi des titanates permet d'améliorer l'adhérence des films notamment de nickel sur les substrats plastiques ainsi que de catalyser la réaction d'oxydoréduction in situ à la surface. Les concentrations en titanates dans les solutions sont comprises entre 0,1 et 12 % en poids et de préférence entre 1 et 7 %. A titre d'exemple de brillanteurs, on peut citer:

- les sulfimides comme la saccharine utilisée à des concentrations allant de 0,1g/l jusqu'à 10g/l et de préférence entre 1 et 5g/l;
- les sulfanamides comme le benzosulfanamide utilisé à des concentrations allant de 0,1g/l jusqu'à 12g/l et de préférence de 1 à g/l;
- les sulfonates comme le naphtalène trisulfonate de sodium, utilisé à des concentrations inférieures à 4 g/l;
- alcool propargylique, thiourée, mercaptobenzothiazoles utilisé à des concentrations inférieures à 3g/l.

Les tensioactifs utilisables le sont à des concentrations allant de 1 à 5 fois la concentration micellaire critique CMC du tensioactif mis en oeuvre. A titre d'exemples du tensioactif on peut citer: Le Dodécylsulfate de Sodium SDS (anionique: 2 x CMC), le lauryl-sulfonate de Sodium (anionique: 4 x CMC) et le polyoxyéthylènonylphényléther (non ionique: l x CMC).

L'adjonction de particules et/ou de fibres dans les solutions projetées, permet d'obtenir des dépôts composites. Ces particules ou ces fibres de charge organique ou inorganique confèrent au film composite dont la matrice est métallique, des caractéristiques intéressantes de frottement, d'abrasion, de dureté et de ténacité.

Les charges organiques peuvent par exemple être des billes de Téflon ou PTFE polytétrafluoroéthylène. Les charges inorganiques peuvent être par exemple des particules de graphites, des billes de verre, des particules de silice ou bien des pigments ou colorants. Les particules ou les fibres sont mises en suspension par exemple dans la solution de sels métalliques. On peut utiliser dans cette solution n'importe qu'elle particule capable de modifier les propriétés tribologiques du film métallique déposé.

En tout état de cause, les films composites obtenus pour le procédé selon l'invention possèdent toutes les propriétés des films métalliques simples et sont homogènes. Conformément à l'invention, les solutions peuvent être additionnées de nombreux autres additifs, en particulier tels que les agents modificateurs de viscosité, comme l'éthylène glycol. Un ajustement fin de la viscosité permet en effet d'éviter les phénomènes d'écoulement sur le substrat. Les réactifs restent donc plus longtemps au même endroit en contact avec le substrat. Il s'ensuit que la masse déposée et donc le rendement de la réaction d'oxydoréduction sont améliorés. D'autre part, l'augmentation de la viscosité améliore la dispersion et la suspension des particules ou fibres, dans le cas d'élaboration de dépôt composite.

Les avantages du procédé perfectionné suivant l'invention sont nombreux. Il est automatisé. Les solutions sont utilisées dans des quantités limitées compatibles avec les exigences économiques à l'échelle industrielle. L'adhérence du dépôt est excellente quel que soit le substrat (métal, matière plastique, céramique). Il est possible d'atteindre des épaisseurs importantes en quelques minutes avec des cinétiques de plusieurs dizaines de microns par heure. Le revêtement peut être obtenu à température ambiante, de manière instantané, sans nécessité de traitement ultérieur (par exemple thermique). Toutefois, il va de soi que de tels traitements peuvent être envisagés si on souhaite modifier la structure superficielle du dépôt.

Les dépôts réalisés peuvent l'être à des fins de décoration, de finition, de protection contre la corrosion (nickel, zinc, Cu...). Ces dépôts peuvent également permettre de fonctionnaliser le substrat en lui conférant des propriétés de surface particulières (électriques, magnétiques, mécaniques). Il peut s'agir par exemple de protection de boîtier plastique pour équipement électronique en vue du blindage électromagnétique.

Le procédé perfectionné selon l'invention permet non seulement de réduire la consommation en matières premières, mais il offre des possibilités avantageuses de recyclage.

Ainsi, selon une modalité avantageuse du procédé perfectionné conforme à l'invention :

> ➢ on récupère les boues qui sont produites à l'issue de la métallisation et qui contiennent des oxydes métalliques;
> ➢ on filtre ces boues;
> ➢ on dissout le rétentat à l'aide d'au moins un acide fort;
> ➢ on augmente le pH de la solution de rétentat dans l'acide fort de manière à faire précipiter l'hydroxyde métallique ou successivement les différents hydroxydes métalliques correspondants au métal ou aux métaux employé(s) dans la métallisation;
> ➢ on recueille séparément le ou les précipité(s) d'hydroxyde(s) métallique(s);
> ➢ et, éventuellement on recycle cet (ou ces) hydroxyde(s) métallique(s) dans le procédé de métallisation.

La récupération des boues est une opération facile à mettre en oeuvre, de même que la filtration.

L'intérêt du procédé perfectionné conforme à l'invention est que la filtration permet, d'une part, d'isoler la matière solide des boues qui contient les oxydes métalliques recyclables, et, d'autre part, de produire un filtrat liquide non écotoxique qui est donc facilement gérable sur le plan environnemental.

L'acide fort susceptible d'être utilisé pour la dissolution du rétentat de filtration est par exemple choisi dans le groupe comprenant l'acide nitrique, l'acide sulfurique, l'acide borique, l'acide acétique et leurs mélanges.

La solution d'acide(s) fort(s) employé(s) pour cette dissolution présente une concentration en acide(s) fort(s) comprise entre 0,5 et 5 moles par litre, de préférence de l'ordre de 1 mole par litre.

Pour augmenter le pH de la solution de rétentat dans l'acide fort, on utilise par exemple une base choisie dans le groupe comprenant : soude, ammoniac, chaux et leurs mélanges.

La concentration de la solution basique utilisée à cette fin est, par exemple, comprise entre 0,1 et 5 mol/l, de préférence entre 0,5 et 3 mol/l, et plus préférentiellement encore entre 1 et 2 mol/l.

Le recueil du ou des précipités d'hydroxydes métalliques s'opère aisément par filtration, décantation ou centrifugation, par exemple.

Le (ou les) différent(s) hydroxyde(s) métallique(s) solide(s) obtenu(s) peuvent être aisément remis en solution et réutilisé(s) dans le procédé perfectionné de métallisation selon l'invention.

Selon un autre de ces aspects, la présente invention concerne un dispositif pour la mise en oeuvre du procédé perfectionné tel que défini ci-dessus.

A titre d'illustration du dispositif selon l'invention, on décrit ci-après un exemple de réalisation parmi d'autres, en référence aux dessins annexés, dans lesquels :

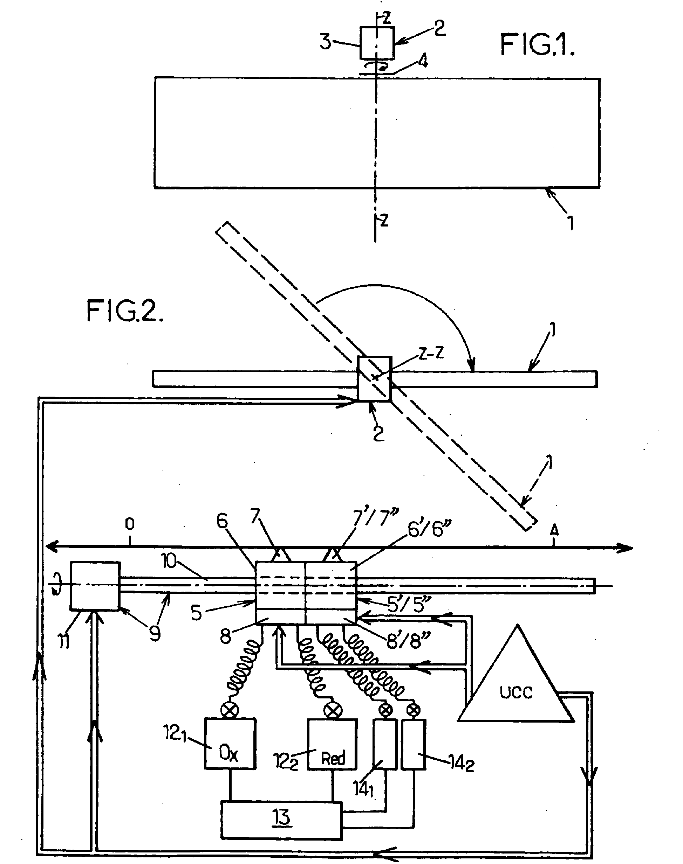

> ■ **la figure 1** représente une vue de face du substrat à métalliser supporté par des moyens de maintien jouant également le rôle de moyens de mise en rotation dudit substrat ;

■ **la figure 2** représente schématiquement une vue de dessus du dispositif selon l'invention, dans lequel les éléments de la figure 1 ont été repris;

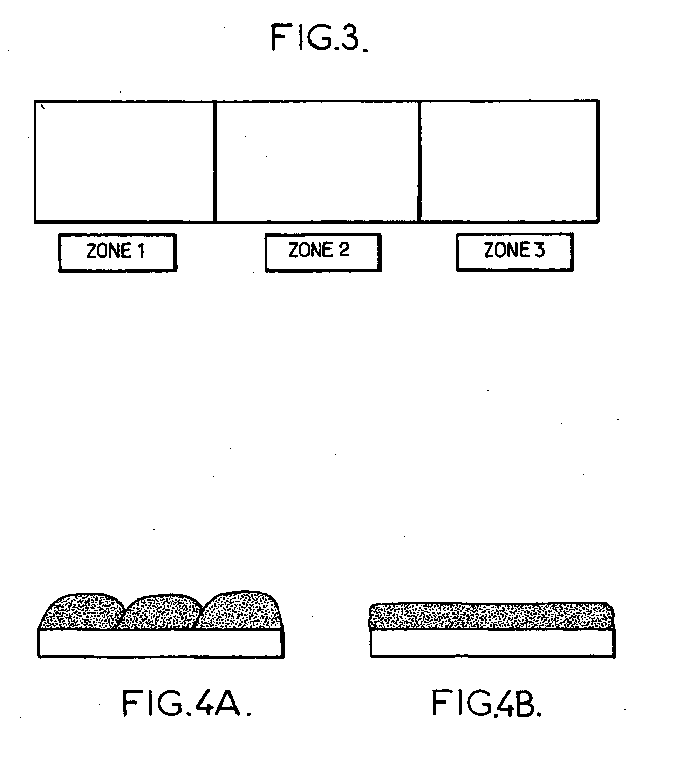

■ **la figure 3** représente une vue de face du substrat à métalliser selon le protocole de l'exemple comparatif 1 ;

■ **les figures 4A & 4B** représentent schématiquement une coupe longitudinale des dépôts métalliques obtenus à l'issue des métallisations selon l'exemple comparatif 1 et l'exemple 1 respectivement.

La figure 1 montre un substrat de forme générale plane rectangulaire, désigné par la référence 1. Ce substrat 1 est donc dans cet exemple une plaque parallélépipédique mince de polymère plastique. Cette plaque 1 est supportée par des moyens de maintien 2 comprenant des moyens de mise en rotation 3 (par exemple un moteur associé à un variateur numérique) et des moyens supports 4 supportant directement le substrat 1. La mise en rotation éventuelle, de préférence partielle et en alternance, du substrat 1 s'effectue autour de l'axe vertical Z-Z.

La figure 2 reprend en vue de dessus, le substrat 1 monté mobile en rotation sur les moyens de mise en rotation 3 équipés d'un variateur numérique. Le dispositif de la figure 2 comporte également des moyens 5 de projection du métal sous forme cationique (oxydant) et du réducteur. Ces moyens de projection 5 comprennent une partie 6 porteuse d'au moins une buse de projection 7, en l'occurrence une, et une partie 8 d'admission, et éventuellement de mélange, des solutions oxydante et réductrice. Ces moyens de projection 5 sont montés sur un système de déplacement 9 comprenant un axe 10 supportant les moyens 5 et entraînable en rotation par un moteur 11.

Comme montré sur la figure 2, le dispositif inclut également une Unité de Calcul et de Commande : UCC, de préférence un micro-ordinateur, à laquelle sont asservis les moyens de projection 5, le système de déplacement 9 desdits moyens de projection 5, et les moyens de mise en rotation 3 du substrat 1.

Le dispositif comprend des moyens 5'/5" de projection de l'aérosol ou de vapeurs de liquide de mouillage et de liquide de rinçage. Ces moyens 5'/5" sont constitués par une partie 6'/6" porteuse d'au moins une buse de projection 7'/7", en l'occurrence une, et une partie 8'/8" d'admission du fluide de mouillage sous forme liquide ou vapeur. Ces moyens de projection 5'/5" sont montés sur le système de déplacement 9 ci-dessus décrit et qui permet de mettre en mouvement le(s) pistolet(s) de projection de vapeurs et/ou d'aérosol de liquide de mouillage ou de liquide de rinçage, par translation selon des trajectoires $T_{OA}$ et $T_{AO}$.

Le dispositif comporte par ailleurs des réservoirs $12_1$, $12_2$, $14_1$ et $14_2$ reliés à un compresseur d'air 13, de manière à pouvoir alimenter, respectivement, les moyens de projection 5 en solution oxydante $12_1$ et en solution réductrice $12_2$ et les moyens de projection 5'/5" en vapeurs de liquide de mouillage ou en liquide de mouillage $14_1$ et en liquide de rinçage $14_2$, selon le cas.

Les doubles traits fléchés qui relient l'UCC aux moyens 5 de projection au système 9 de déplacement et aux moyens 3 de mise en rotation du substrat 1, symbolisent le contrôle exercé par l'UCC sur ces éléments. Naturellement, il est envisageable que les signaux analogiques ou numériques transitant par ces connexions circulent non seulement dans le sens UCC → périphériques, mais également dans le sens inverse.

La figure 2 comprend également un axe OA symbolisant la trajectoire "aller" $T_{OA}$ et la trajectoire "retour" $T_{AO}$ de balayage des moyens de projection 7 entraînés par le système de déplacement 9 pour la métallisation du substrat 1 entraînable en rotation autour de l'axe Z-Z montré sur la figure 1.

Dans l'exemple de la figure 2, l'axe Z-Z est sensiblement orthogonal à l'axe OA symbolisant les trajectoires $T_{OA}$ et $T_{AO}$ des moyens de projection en déplacement.

La buse 7 des moyens de projection 5 ou la buse 7'/7" des moyens de projection 5'/5" produit, lors du trajet OA correspondant à la phase de projection, un cône de projection d'aérosol Ox et/ou Red ou un cône de projection d'aérosol ou de vapeurs de liquide de mouillage qui balaye la surface à métalliser, à mouiller ou à rincer du substrat 1.

L'invention est susceptible d'avoir des retombées dans tous les domaines intéressés par le traitement de surface, à savoir par exemple l'automobile, l'aéronautique, la mécanique, l'électronique et en général tous les domaines ou le nickel chimique est employé. L'invention sera mieux comprise, ses avantages et ses variantes ressortiront bien des exemples qui suivent de mise en oeuvre du procédé selon l'invention.

EXEMPLES

I - DISPOSITIF MIS EN OEUVRE

Le dispositif mis en oeuvre dans les exemples est du type de celui décrit ci-dessus en référence aux figures 1 et 2.

Les moyens de maintien 2 du substrat à métalliser comprennent un moteur 3 de mise en rotation du substrat 1 (servomoteur brushless contrôlé par un variateur numérique SERAD MD230/M/2. Ce moteur est équipé d'une platine rotative sur laquelle peut être fixée le substrat.

L'ensemble de projection comprend trois parties principales:

1 - Une source d'air comprimé 13 provenant d'un compresseur à l'huile (1-8 bars) ou bien une source d'azote stocké sous pression.

2 - Deux réservoirs distincts 12 : chacun contient une solution (l'oxydant et le réducteur respectivement) dont le mélange va constituer le milieu réactionnel. Chaque réservoir est étanche ce qui permet d'exercer une surpression à l'intérieur. Un tube d'acier inoxydable plonge dans les solutions permettant de les véhiculer vers le pistolet par l'intermédiaire d'un tube souple. Un détendeur relié à la source d'air comprimé permet de faire varier la pression sur les solutions et leur débit dans les moyens de projection 5.

3 - Ces moyens de projection 5 comportent un pistolet 6 qui est un pistolet automatique AGPV 569/579 commercialisés par la société ITW - Surface & Finitions S.A. Le pistolet 6 comporte une partie 8 d'admission des solutions Ox/Red et deux buses 7 concentriques en inox permettant de nébuliser et d'homogénéiser le mélange des deux solutions. Des réglages au niveau de la tête des pistolets permettent d'obtenir un jet conique plus ou moins homogène.

Le système de déplacement 9 des moyens de projection 5 comporte un bâti en aluminium incluant un axe 10 -axe linéaire EL Z60- motorisé (moteur 11 servomoteur *brushless*) contrôlé par un variateur numérique SERAD MD230/M/ 2 permettant de mettre en mouvement le(s) pistolet(s) 6,7 de pulvérisation par translation selon des trajectoires $T_{OA}$ et $T_{AO}$.

Le dispositif comprend des moyens combinés de projection 5'/5" de l'aérosol ou de vapeurs de liquide de mouillage et de liquide de rinçage. Ces moyens 5'/5" sont constitués par une monobuse pneumatique de projection 7'/ 7" reliée à une partie porteuse 6'/6". Ces moyens 5'/5" sont associés au système de déplacement 9 susdécrite qui permet de mettre en mouvement le(s) pistolet(s) de projection combinée 6'/6", 7'/7" de mouillage ou de rinçage, par translation selon des trajectoires $T_{OA}$ et $T_{AO}$.

L'automatisation est assurée une UCC (un microordinateur) qui gère:

- les débits des solutions de façon à ajuster le ratio débit Ox/Red,
- le moteur 3 de mise en rotation du substrat 1,
- les moyens de mouillage 5',
- les moyens de projection 5 Ox/Red,
- les moyens 5" de rinçage,
- et le système de déplacement 9 des moyens de projection 5, 5' et 5".

En particulier, l'UCC est apte à gérer la commutation mouillage/rinçage au sein des moyens combinés 5'/5".

La croissance des films métalliques est suivie à l'aide d'une balance à quartz du type "Maxtek PM 500". C'est un appareil qui permet de mesurer la masse déposée sur une surface donnée, en l'occurrence sur une sonde exposée à la projection de métallisation au même titre que la surface à métalliser. On est ainsi capable de remonter à l'épaisseur du film connaissant quelques facteurs importants tels que la densité et l'impédance acoustique du film déposé.

La mesure s'effectue pendant les phases de relaxation, c'est-à-dire pendant le balayage selon $T_{OA}$, on mesure l'épaisseur du film avec la balance après les phases de rinçage.

II - METHODOLOGIE

II.1 TRAITEMENT DES SUBSTRATS POUR LES DEPOTS

Les surfaces des substrats peuvent être ou non soumises à un traitement chimique et/ou mécanique. Ce dernier peut être un polissage par abrasion aux papiers de verre ou bien par sablage avec des granules d'alumine. En ce qui concerne les traitements chimiques on utilise des solutions classiques d'attaque, tel que les mélanges sulfochromiques ou les permanganates. Le but de ces traitements est d'augmenter l'adhérence des films. Pour uniformiser et standardiser la surface des substrats, on peut utiliser un primaire d'impression (vernis) préalablement déposé sur la surface. Pour les substrats plastiques une étape d'activation par une solution colloïdale de PdSn est nécessaire. Une durée de 25 minutes dans la solution colloïdale permet d'activer à saturation. L'étape d'accélération par le HCl 1M dure une minute. Pour le dégraissage on utilise les alcools ex: méthanol 1 pour les plastiques et un mélange 50/50 de toluène et d'acétone pour les substrats conducteurs. Dans tous les cas, on peut avoir recours à des dégraissants aqueux pour simplifier la procédure et préserver l'environnement.

II.2 PROCEDURE DE PROJECTION

Les exemples 1 à 8 qui suivent en donnent une illustration.

*Exemple comparatif 1 : Procédure de métallisation selon le brevet FR-B-2763962*

Dépôt d'un film métallique constitué par un alliage Ni-B sur un substrat d'ABS plastique) On définit:

$\Delta$t: durée de projection en ms.
$\Gamma$: durée de la relaxation en ms.
$\Delta$S: séquence de la projection en ms.
*$q_r$: débit de la solution réductrice en ml/pulsation (projection)
*$q_m$: débit de(s) la solution(s) de sel(s) métallique(s) en ml/pulsation (projection).

Le dispositif de projection mis en oeuvre comprend un compresseur à air, 2 réservoirs et un pistolet manuel de type MSV 2 K.

**Conditions opératoires**

1. Solution oxydante : $NiCl_2$, $6H_2O$ à 13g/l.
2. Solution réductrice : $KBH_4$ à 15g/l.
3. Eau de rinçage : Eau déionisée.
4. Substrat : Un polymère d'ABS de surface 300cm$^2$ (30cm*10cm).

Comme montré sur la figure 3, le substrat est subdivisé en 3 zones sur chacune desquelles on réalise une projection d'un brouillard obtenu par nébulisation des 2 solutions oxydante et réductrice mélangées, la taille des gouttelettes de ce brouillard étant de 50 $\mu$m, selon un protocole tel que défini à la figure 1 du brevet FR-B-2 763 962.
R: Etape de rinçage t: temps M: masse.
Pendant le temps $\Delta$t = 550 ms, les solutions sont projetées.
Pendant le temps r = 900 ms, les solutions ne sont pas projetées, le film liquide à la surface du substrat n'est plus alimenté en réactif.
$\Delta$S représente une séquence de projection correspondant à 50 pulsations (ou projections) relaxations.
Entre chaque étape séquence de projections, une étape de rinçage est réalisée, avec R = 1500 ms.
Les conditions de distance de projection sont telles que la trajectoire soit rectiligne par rapport à la surface.
Le brouillard de projection est provoqué par nébulisation des solutions dont la taille des gouttelettes est de 50 $\mu$m.

*Exemple 1 : Procédure de métallisation selon l'invention*

Dépôt d'un film métallique constitué par un alliage Ni-B sur un substrat d'ABS (plastique)

**Conditions opératoires**

Le dispositif de projection mis en oeuvre est celui décrit ci-dessus en I et représenté à la figure 2.

1. Solution oxydante : $NiCl_2$, $6H_2O$ à 13g/l.
2. Solution réductrice : $KBH_4$ à 15g/l.
3. Solution de mouillage : Eau déionisée projetée sur la surface à métalliser, selon un débit de 10ml/s, avec les moyens de projection 5' configurés en moyens de projection pour le mouillage.
4. Eau de rinçage : Eau déionisée projetée sur la surface à métalliser, selon un débit de 20ml/s, avec les moyens de projection 5" configurés en moyens de projection pour le rinçage.
5. Substrat : un polymère d'ABS de surface 300cm$^2$ (30cm*10cm) tel que représenté aux figures 1 et 2.
6. k : constante du nickel comprise entre 1 et 6 s.
7. $V_{OA}$: 0,5 m/s.
8. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30˚)

● Démarrage par l'UCC du mouillage-$a_P$- du substrat pour former un film liquide à la surface: Solution de mouillage projetée pendant 10s par la buse 6' durant le trajet OA.
● Mise en mouvement rotation du substrat. Vitesse Vr.

● Démarrage par l'UCC aussitôt (10s) après la fin du mouillage des 10 (n=10) cycles de projection/relaxation : balayage OA puis AO.

> o Mise en mouvement par l'UCC du pistolet de projection à une vitesse $V_{OA}$ = 0,5 m/s avec projection continue d'un brouillard obtenu par nébulisation des 2 solutions oxydante et réductrice mélangées, la taille des gouttelettes de ce brouillard étant de 50 $\mu$m.
> o Retour du pistolet 6 au point origine selon la trajectoire AO à une vitesse,

$$V_{AO} = AO / [k - (OA / V_{OA})] = 0,2 \text{ m/s}$$

● Après 10 cycles de projection/relaxation (n=10), une étape de rinçage est mise en oeuvre avec la monobuse pneumatique de projection 6", chaque étape de rinçage durant 1500ms durant un trajet OA.
● Le nombre total N de cycles projection/relaxation effectués est de 100.

*Exemple 2 : Résultats de l'exemple comparatif 1 et de l'exemple 1* :

Exemple comparatif 1 : Le dépôt de nickel obtenu est soudable, et adhérent. La dureté du dépôt est de l'ordre de 400 à 500 Vickers.

Exemple 1 : Le film de nickel obtenu ainsi est soudable et très adhérent sur toute la surface de la pièce. Il est parfaitement homogène. Son épaisseur est de 0,5$\mu$m. La dureté du dépôt est de l'ordre de 400 à 500 Vickers.

Les figures 4A et 4B représentent les dépôts obtenus dans l'exemple comparatif 1 et dans l'exemple 1.

Les dépôts obtenus sur par la procédure de l'exemple comparatif 1 ne sont pas homogènes sur toute la surface. En revanche, par la procédure de perfectionnement l'exemple 1 le dépôt est parfaitement homogène sur toute la surface du substrat.

La consommation en matières premières dans l'exemple 1 est nettement inférieure à celle de l'exemple comparatif 1. Plus précisément, la gestion informatisée des débits permet un rapport de la consomation en solution oxydante et en solution réductrice dans l'exemple comparatif 1 sur la consommation en solution oxydante et en solution réductrice dans l'exemple 1, est de l'ordre de 1,5.

*Exemple 3 : Dépôt d'un film métallique Cu sur un substrat de polymère Epoxy chargé fibre de verre de surface 300cm$^2$ (30cm\*10cm)*

**Conditions opératoires**

Le dispositif de projection mis en oeuvre est celui décrit ci-dessus en I et représenté à la figure 2.

1. Solution oxydante : $CuSO_4$, $8H_2O$ à 9g/l.
2. Solution réductrice : $KBH_4$ à 15g/l.
3. Solution de mouillage : Eau déionisée projetée sur la surface à métalliser, selon un débit de 10ml/s, avec les moyens de projection 5' configurés en moyens de projection pour le mouillage.
4. Eau de rinçage : Eau déionisée projetée sur la surface à métalliser, selon un débit de 20ml/s, avec les moyens de projection 5" configurés en moyens de projection pour le rinçage.
5. Substrat : Un polymère d'époxy de surface 300cm$^2$ (30cm\*10cm) tel que représenté aux figures 1 et 2.
6. k : constante du cuivre comprise entre 2 et 9 s
7. $V_{OA}$: 0,05 m/s
8. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30˚)

> ● Démarrage par l'UCC du mouillage-$a_p$- du substrat pour former un film liquide à la surface: Solution de mouillage projetée pendant 10s par la buse 6' durant le trajet OA.
> ● Mise en mouvement rotation du substrat. Vitesse Vr
> ● Démarrage par l'UCC aussitôt (10s) après la fin du mouillage des 10 (n=10) cycles de projection/relaxation : balayage OA puis AO.

> o Mise en mouvement par l'UCC du pistolet de projection à une vitesse $V_{OA}$ = 0,05 m/s avec projection continue d'un brouillard obtenu par nébulisation des 2 solutions oxydante et réductrice mélangées, la taille des gouttelettes de ce brouillard étant de 50 $\mu$m.

o Retour du pistolet 6 au point origine selon la trajectoire AO à une vitesse,

$$V_{AO} = AO / [k - (OA / V_{OA})] = 0,3 \text{ m/s}$$

● Après 10 cycles de projection/relaxation (n=10), une étape de rinçage est mise en oeuvre avec la monobuse pneumatique de projection 6", chaque étape de rinçage durant 1500ms durant un trajet OA.

Le nombre total N de cycles projection/relaxation effectués est de 100.

Résultats :

Les films de cuivre obtenus ainsi sont soudables et très adhérents sur toute la surface de la pièce. Ils sont parfaitement homogènes. Leur épaisseur est de l'ordre de 0,5 $\mu$m. La résistivité électrique du film métallique obtenu est de l'ordre de 0,02 $\Omega$/cm.

*Exemple 4 : Dépôt d'un film métallique constitués par un alliage ternaire Ni-B-P sur un substrat d'ABS (plastique)*

Conditions opératoires

Le dispositif de projection mis en oeuvre est celui décrit ci-dessus en 1 et représenté à la figure 2.

1. Solution oxydante : $NiSO_4$ $NaH_2PO_2$. Ratio molaire entre 0,15 et 0,5.
2. Débit 0,5ml/projection.
3. Solution réductrice : $KBH_4$ à 15g/l.
4. Solution de mouillage : Eau déionisée projetée sur la surface à métalliser, selon un débit de 10ml/s, avec les moyens de projection 5' configurés en moyens de projection pour le mouillage.
5. Eau de rinçage : Eau déionisée projetée sur la surface à métalliser, selon un débit de 20ml/s, avec les moyens de projection 5" configurés en moyens de projection pour le rinçage.
6. Substrat: Un polymère d'ABS de surface 300cm$^2$ (30cm*10cm) tel que représenté aux figures 1 & 2.
7. $V_{OA}$ : 4m/s.
8. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30˚).

- Démarrage par l'UCC du mouillage-a$_P$- du substrat pour former un film liquide à la surface: Solution de mouillage projetée pendant 10s par la buse 6' durant le trajet OA.
- Mise en mouvement rotation du substrat. Vitesse Vr.
- Enceinte du dispositif thermo-contrôlée entre 25 et 45˚C.
- Démarrage par l'UCC aussitôt (10s) après la fin du mouillage des 10 (n=10) cycles de projection/relaxation : balayage OA puis AO.

o Mise en mouvement par l'UCC du pistolet de projection à une vitesse $V_{OA}$ = 4 m/s avec projection continue d'un brouillard obtenu par nébulisation des 2 solutions oxydante et réductrice mélangées, la taille des gouttelettes de ce brouillard étant de 50 $\mu$m.

o Retour du pistolet 6 au point origine selon la trajectoire AO à une vitesse,

$$V_{AO} = AO / [k - (OA / V_{OA})] = 2\text{m/s}$$

- Après 10 cycles de projection/relaxation (n=10), une étape de rinçage est mise en oeuvre avec la monobuse pneumatique de projection 6", chaque étape de rinçage durant 1500ms durant un trajet OA.

Le nombre total N de cycles projection/relaxation effectués est de 100.

Résultats :

Le film de nickel-bore-phosphore obtenu ainsi est soudable et très adhérent sur toute la surface du substrat. Il est parfaitement homogène. Son épaisseur est de 0,64 μm. Le dépôt contient de 4 à 5% de Bore et 4 à 5% de Phosphore. La densité est de ρ= 7,3.

*Exemple 5 : Dépôt d'un film métallique constitué par un alliage ternaire Ni-B-P avec particules de PTFE sur un substrat d'ABS (plastique)*

**Conditions opératoires**

Le dispositif de projection mis en oeuvre est celui décrit ci-dessus en I et représenté à la figure 2.

1. Solution oxydante : $NiSO_4$ $NaH_2PO_2$. Ratio molaire entre 0,15 et 0,5.
2. Débit 0,5 ml/projection.
3. Solution réductrice : $KBH_4$ à 15g/l.
4. Suspension de billes de Téflon TPFE de diamètre moyen = 500nm, à une concentration de 15 g/l dans la solution oxydante.
5. Solution de mouillage : Eau déionisée projetée sur la surface à métalliser, selon un débit de 5 ml/s, avec les moyens de projection 5' configurés en moyens de projection pour le mouillage.
6. Eau de rinçage : Eau déionisée projetée sur la surface à métalliser, selon un débit de 1 ml/s, avec les moyens de projection 5" configurés en moyens de projection pour le rinçage.
7. Substrat: Un polymère d'ABS de surface $300cm^2$ (30cm*10cm) tel que représenté aux figures 1 et 2.
8. $V_{OA}$ : 4m/s.
9. Rotation suivant l'axe Z-Z des figures 1 et 2, qui est médian et orthogonal à la longueur de la plaque à une vitesse : 8 tr/s « avec phases d'arrêt durant le cycle». La rotation commence après la phase de rinçage (angle 30˚)

- Démarrage par l'UCC du mouillage-$a_P$- du substrat pour former un film liquide à la surface: Solution de mouillage projetée pendant 10s par la buse 6' durant le trajet OA.
- Mise en mouvement rotation du substrat. Vitesse Vr.
- Enceinte du dispositif thermo-contrôlée entre 25 et 45˚C.
- Démarrage par l'UCC aussitôt (10s) après la fin du mouillage des 10 (n=10) cycles de projection/relaxation : balayage OA puis AO.

> o Mise en mouvement par l'UCC du pistolet de projection à une vitesse $V_{OA}$ = 4 m/s avec projection continue d'un brouillard obtenu par nébulisation des 2 solutions oxydante et réductrice mélangées, la taille des gouttelettes de ce brouillard étant de 50 μm.
> o Retour du pistolet 6 au point origine selon la trajectoire AO à une vitesse,

$$V_{AO} = AO / [k - (OA / V_{OA})] = 2m/s$$

- Après 10 cycles de projection/relaxation (n=10), une étape de rinçage est mise en oeuvre avec la monobuse pneumatique de projection 6", chaque étape de rinçage durant 1500ms durant un trajet OA.

Le nombre total N de cycles projection/relaxation effectués est de 100.

Résultats :

Le film de nickel-bore-phosphore-PTFE obtenu ainsi est soudable et très adhérent sur toute la surface de la pièce. Il est parfaitement homogène. Son épaisseur est de 0,64 μm. Le dépôt contient de 4 à 5% de Bore et 4 à 5% de Phosphore et 22% de PTFE. La densité est de ρ= 6,2. Le coefficient de frottement obtenu est de l'ordre de 0,1.

*Exemple 6 : Dépôt d'un film métallique multicouche alternée Cu/Ni sur un substrat de polymère Epoxy chargé fibre de*

*verre de surface 300cm² (30cm*10cm)*

**Conditions opératoires**

Le dispositif de projection mis en oeuvre est celui décrit ci-dessus en 1 et représenté à la figure 2.

1. Solution oxydante 1 : $CuSO_4$, $8H_2O$ à 9g/l.
2. Solution réductrice 1 : $KBH_4$ à 15g/l.
3. Solution oxydante 2: $NiCl_2$, $6H_2O$ à 13g/l.
4. Solution réductrice2 : $KBH_4$ à 15g/l.
5. Solution de mouillage : Eau déionisée projetée sur la surface à métalliser, selon un débit de 10 ml/s, avec les moyens de projection 5' configurés en moyens de projection pour le mouillage.
6. Eau de rinçage : Eau déionisée projetée sur la surface à métalliser, selon un débit de 20 ml/s, avec les moyens de projection 5" configurés en moyens de projection pour le rinçage.
7. Substrat : Un polymère d'époxy de surface 300cm² (30cm*10cm) tel que représenté aux figures 1 et 2.
8. $V_{OA}$: 0,5m/s.
9. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30˚)

- Démarrage par l'UCC du mouillage-$a_p$- du substrat pour former un film liquide à la surface: Solution de mouillage projetée pendant 10s par la buse 6' durant le trajet OA.
- Mise en mouvement rotation du substrat. Vitesse Vr.
- Enceinte du dispositif thermo-contrôlée entre 25 et 45˚C.
- Démarrage par l'UCC aussitôt (10s) après la fin du mouillage avec en alternance:
- une sous-séquence Δs de m =15 cycles de projection/relaxation d'un aérosol de solution oxydante 1 et de solution réductrice 1 pour former une couche de cuivre: balayage OA puis AO.

  o Mise en mouvement par l'UCC du pistolet de projection à une vitesse $V_{OA}$ = 0,5m/s avec projection continue d'un brouillard obtenu par nébulisation des deux solutions oxydante 1 et réductrice 1 mélangées, la taille des gouttelettes de ce brouillard étant de 50 $\mu$m.
  o Retour du pistolet 6 au point origine selon la trajectoire AO à une vitesse

$$V_{AO} = AO \, / \, [k - (OA \, / \, V_{OA})] = 0,3 \text{ m/s}$$

  o Après 15 cycles de projection/relaxation, une étape de rinçage est mise en oeuvre avec la monobuse pneumatique de projection 6", chaque étape de rinçage durant 1500ms durant un trajet OA.

- une sous-séquence Δs de m =15 cycles de projection/relaxation d'un aérosol de solution oxydante 2 et de solution réductrice 2 pour former une couche de nickel: balayage OA puis AO.

  o Mise en mouvement par l'UCC du pistolet de projection à une vitesse $V_{OA}$ = 0,5m/s avec projection continue d'un brouillard obtenu par nébulisation des deux solutions oxydante 2 et réductrice 2 mélangées, la taille des gouttelettes de ce brouillard étant de 50 $\mu$m.
  o Retour du pistolet 6 au point origine selon la trajectoire AO à une vitesse

$$V_{AO} = AO \, / \, [Dr - (OA \, / \, V_{OA})] = 0,3\text{m/s}$$

  o Après 15 cycles de projection/relaxation, une étape de rinçage est mise en oeuvre avec la monobuse pneumatique de projection 6", chaque étape de rinçage durant 1500ms durant un trajet OA

- Cette succession de ces deux sous-séquences alternées est répétée 10 fois, de sorte que le nombre total N de cycles de projection/rélaxation est de 150

Résultats :

On obtient un film multicouche alternée Cu / Ni. Ce film est soudable et très adhérent sur toute la surface de la pièce. Il est parfaitement homogène. Son épaisseur est de l'ordre de 0,7 $\mu$m. Le film métallique multicouche obtenu a une résistance au brouillard salin de l'ordre de 500 heures, dans le test ASTM B117 avec 5% de NaCl, à 35°C, à pH 6,5 et 7.

*Exemple 7 : Dépôt d'un film métalique Ag sur un substrat d'ABS (cylindre) de dimension (diamètre : 5cm, hauteur: 9cm)*

**Conditions opératoires**

Le dispositif de projection mis en oeuvre est celui décrit ci-dessus en I et représenté à la figure 2.

1. Solution oxydante : sels d'argent à 2g/l.
2. Solution réductrice : Glucose à 15g/l.
3. Solution de mouillage : Eau déionisée projetée sur la surface à métalliser, selon un débit de 10ml/s, avec les moyens de projection 5' configurés en moyens de projection pour le mouillage.
4. Eau de rinçage : Eau déionisée projetée sur la surface à métalliser, selon un débit de 20ml/s, avec les moyens de projection 5" configurés en moyens de projection pour le rinçage.
5. Substrat : Un substrat d'ABS cylindrique *(diamètre: 5cm, hauteur : 9cm)*
6. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30°)

- Démarrage par l'UCC du mouillage-$a_p$- du substrat pour former un film liquide à la surface: Solution de mouillage projetée pendant 10s par la buse 6' durant le trajet OA.
- Mise en mouvement rotation du substrat. Vitesse Vr.
- Démarrage par l'UCC aussitôt (10s) après la fin du mouillage des 10 (n=10) cycles de projection/relaxation : balayage OA puis AO.
- Après 10 cycles de projection/relaxation (n=10), une étape de rinçage est mise en oeuvre avec la monobuse pneumatique de projection 6", chaque étape de rinçage durant 1500ms durant un trajet OA.

Le nombre total N de cycles projection/relaxation effectués est de 40

Résultats :

Les films d'argent obtenus ainsi sont soudables et très adhérents sur toute la surface de la pièce. Ils sont parfaitement homogènes. Leur épaisseur est de l'ordre de 0,15 $\mu$m. Le dépôt est brillant et très réfléchissant.

*Exemple 8 : Dépôt d'un film métallique Ag sur un substrat (cylindre) d'ABS de dimension (diamètre : 5cm, hauteur: 9cm)*

**Conditions opératoires**

Le dispositif de projection mis en oeuvre est celui décrit ci-dessus en I et représenté à la figure 2.

1. Solution oxydante : sels d'argent à 2g/l.
2. Solution réductrice : Glucose à 15g/l.
3. Solution de mouillage : Eau déionisée projetée sur la surface à métalliser, selon un débit de 10ml/s, avec les moyens de projection 5' configurés en moyens de projection pour le mouillage.
4. Eau de rinçage : Eau déionisée projetée sur la surface à métalliser, selon un débit de 20ml/s, avec les moyens de projection 5" configurés en moyens de projection pour le rinçage.
5. Substrat : Un substrat d'ABS cylindrique *(diamètre : 5cm, hauteur : 9cm)*
6. Rotation suivant l'axe Z-Z des figures 1 et 2, qui est médian et orthogonal à la longueur de la plaque à une vitesse : 8 tr/s « avec phases d'arrêt durant le cycle ». La rotation commence après la phase de rinçage (angle 30°)

- Démarrage par l'UCC du mouillage-$a_p$- du substrat pour former un film liquide à la surface: Solution de mouillage projetée pendant 10s par la buse 6'.
- Mise en mouvement rotation du substrat. Vitesse Vr.
- Démarrage par l'UCC aussitôt (10s) après la fin du mouillage des 10 (n=10) cycles de projection/relaxation.

- Après 10 cycles de projection/relaxation (n=10), une étape de rinçage est mise en oeuvre avec la monobuse pneumatique de projection 6", chaque étape de rinçage durant 1500ms.

Le nombre total N de cycles projection/relaxation effectués est de 40.

Résultants :

Les films d'argent obtenus ainsi sont soudables et très adhérents sur toute la surface de la pièce. Ils sont parfaitement homogènes. Leur épaisseur est de l'ordre de 0,15 $\mu$m. Le dépôt est brillant et très réfléchissant.

**Revendications**

1. Procédé non-électrolytique perfectionné de métallisation d'au moins une partie de la surface d'un substrat (ci-après dénommée surface à métalliser), par projection à l'aide de moyens adaptés d'au moins un aérosol aqueux et/ou organique contenant au moins un métal sous forme cationique (oxydant) et au moins un réducteur, apte à transformer le cation métallique en métal, du type de ceux consistant essentiellement à: - a - éventuellement sensibiliser et/ou activer la surface à métalliser, - b - effectuer la projection de métallisation selon une succession d'au moins deux phases de projection, en alternance avec des phases de relaxation: (i) en fixant la durée Dp des phases de projection entre $10^{-2}$ et 5 s, de préférence entre $10^{-1}$ et 3 s pour une même unité de surface, et la durée Dr des phases de relaxation entre $10^{-2}$ et 10 s, de préférence entre $2 \times 10^{-1}$ et 4 s pour une même unité de surface, les durées Dp et Dr de ces phases de projection et de relaxation étant identiques ou différentes entre elles, (ii) et en ajustant le(s) débit(s) de projection, de telle sorte que le rapport électronique Ox / Red soit compris entre 0,01 et 15, de préférence entre 0,5 et 8, et permette ainsi la formation d'un film métallique chimiquement adhérent au substrat; -c- à interrompre la projection dès lors que le taux de dépôt de métal visé est atteint, **caractérisé en ce que** le perfectionnement consiste notamment **en ce qu'**il est prévu :

   ➢ de mettre en oeuvre au moins une étape préalable -$a_p$- de mouillage du substrat consistant à mettre ce dernier en contact avec au moins un fluide de mouillage, de manière à former sur au moins une partie de sa surface un film liquide;
   ➢ et à la suite du mouillage -$a_p$- de commencer la projection selon l'étape -b- au plus tard 60 s, de préférence au plus tard 40 s, et, plus préférentiellement encore, au plus tard 20s après la fin du mouillage.

2. Procédé selon la revendication 1, **caractérisé en ce que** les durées Dp et Dr, respectivement de projection et de relaxation, sont définies à partir d'une constante k de métallisation intrinsèque à chaque métal telle que k = Dp+Dr, la constante k étant de préférence comprise entre $10^{-1}$ et 13 s plus préférentiellement encore entre 0,5 et 9 s.

3. Procédé selon la revendication 1 ou 2, **caractérisé en ce que**:

   • au moins une partie de la projection de métallisation est effectuée de manière dynamique en déplaçant les moyens de projection par rapport au substrat de manière à effectuer un balayage périodique d'au moins 80 %, de préférence d'au moins 90 %, et, plus préférentiellement encore d'au moins 95 % de la surface à métalliser;
   • pour une unité de surface donnée et comprise dans la zone de balayage :

      ➢ la phase de projection a une durée Dp correspondant à la durée pendant laquelle l'unité de surface considérée est soumise à la projection, de préférence continue, de l'aérosol,
      ➢ la phase de relaxation qui suit cette phase de projection a une durée Dr correspondant à la durée du balayage du reste de la surface à métalliser par les moyens de projection,

   • le déplacement des moyens de projection est défini de telle sorte que :

      ➢ lesdits moyens de projection se déplacent selon une trajectoire $T_{OA}$ entre un point d'origine (O) et un point d'arrivée (A) à une vitesse de déplacement en projection VoA,
      ➢ dès lors que les moyens de projection atteignent le point (A), ils regagnent le point (O) à une vitesse $V_{AO}$ de déplacement sans projection selon une trajectoire $T_{AO}$;
      $V_{AO}$ étant calculée en tenant compte de la distance entre (A) et (O) et de $V_{OA}$, pour que la durée Dr de la phase de relaxation de chaque unité de surface de la surface à métalliser balayée par les moyens de projection, ainsi que la constante k intrinsèque au métal déposé, soit telle que définie ci-dessus,

ce calcul étant de préférence réalisé par une unité de calcul et de commande UCC (de préférence un micro-ordinateur) à laquelle sont asservis les moyens de projection et un système de déplacement desdits moyens de projection;

- éventuellement, pendant au moins une partie de la projection de métallisation, le substrat est mis en rotation.

4. Procédé selon l'une quelconque des revendications précédentes, **caractérisé en ce que** le perfectionnement présente les caractéristiques suivantes:

- au moins une partie de la projection de métallisation est effectuée de manière dynamique en déplaçant les moyens de projection par rapport au substrat et/ou en déplaçant le substrat par rapport aux moyens de projection de manière à effectuer un balayage périodique d'au moins 80 %, de préférence d'au moins 90 %, et, plus préférentiellement encore d'au moins 95 % de la surface à métalliser;
- pour une unité de surface donnée et comprise dans la zone de balayage :

  ➢ la phase de projection a une durée Dp correspondant à la durée pendant laquelle l'unité de surface considérée est soumise à la projection, de préférence continue, de l'aérosol,
  ➢ la phase de relaxation qui suit cette phase de projection a une durée Dr correspondant à la durée du balayage du reste de la surface à métalliser par les moyens de projection.

- le déplacement du substrat par rapport aux moyens de projection étant de préférence une rotation.

5. Procédé selon l'une quelconque des revendications précédentes, **caractérisé en ce que** la durée Dr de la phase de relaxation correspond à la durée pendant laquelle l'unité de surface considérée n'est pas soumise à la projection de l'aérosol.

6. Procédé selon l'une quelconque des revendications précédentes, **caractérisé en ce que** l'on contrôle la température de l'enceinte de métallisation, cette température étant de préférence comprise entre 20 et 60˚C.

7. Procédé selon l'une quelconque des revendications précédentes, **caractérisé en ce que** l'étape préalable -$a_p$- de mouillage est réalisée par projection de vapeurs de liquide de mouillage et/ou d'un aérosol de liquide de mouillage et/ou par immersion dans un bain de liquide de mouillage, ledit liquide de mouillage étant éventuellement chauffé.

8. Procédé selon l'une quelconque des revendications précédentes, **caractérisé en ce que** le liquide de mouillage est choisi dans le groupe comprenant l'eau déionisée ou non, éventuellement additionnée avec au moins un tensioactif anionique, cationique ou neutre, une solution alcoolique comprenant au moins un alcool (par exemple l'isopropanol ou l'éthanol) et leurs mélanges.

9. Procédé selon l'une quelconque des revendications 3 à 8, **caractérisé en ce que** l'étape b est cyclique, chaque cycle comprenant une phase de projection et une phase de relaxation, ce qui correspond à un aller/retour des moyens de projection entre (O), et (A), et **en ce que** le nombre total de N cycles mis en oeuvre est choisi en fonction du taux de dépôt de métal visé au final et du taux de dépôt de métal obtenu à chaque cycle, ce nombre total de N cycles étant compris entre 2 et 5000, de préférence entre 50 et 500, plus préférentiellement encore entre 80 et 200.

10. Procédé selon l'une quelconque des revendications précédentes, **caractérisé en ce que** le substrat est mis en rotation pendant l'étape -b-, de préférence de façon intermittente, à une vitesse comprise entre 1 et 30 tr/min, de préférence entre 5 et 20 tr/min.

11. Procédé selon l'une quelconque des revendications 3 à 10, **caractérisé en ce que** la trajectoire $T_{AO}$ est rectiligne et directe.

12. Procédé selon la revendication 9, **caractérisé en ce que** la formule de calcul de $V_{AO}$ est la suivante :

$$V_{AO} = AO / [k - (OA / V_{OA})]$$

13. Procédé selon la revendication 12, **caractérisé en ce que** $V_{OA}$ est comprise entre 0,01 et 20 m/s, de préférence entre 0,1 et 6 m/s.

14. Dispositif pour la mise en oeuvre du procédé selon l'une quelconque des revendications précédentes, **caractérisé en ce qu'**il comprend :

> des moyens de maintien (2) du substrat (1) à métalliser, éventuellement équipés de moyens de mise en rotation (3) du substrat (1);
> des moyens de mouillage (5') préalable du substrat (1);
> des moyens de projection (5) du métal sous forme cationique (oxydant) et du réducteur;
> d'éventuels moyens de rinçage (5") ;
> un système de déplacement (9) des moyens de projection (5), voire des moyens de mouillage (5') et/ou des moyens de rinçage (5");
> et au moins une unité de calcul et de commande UCC (de préférence un micro-ordinateur) à laquelle sont asservis les moyens de projection (5,5',5") et le système de déplacement (9) desdits moyens de projection (5,5',5").

15. Dispositif selon la revendication 14 pour la mise en oeuvre du procédé selon l'une quelconque des revendications 1 à 13 **caractérisé en ce qu'**il comprend des moyens de mouillage (5') par projection du liquide, **en ce que** ces moyens de mouillage (5') sont déplaçables de préférence à l'aide du système de déplacement (9) des moyens de projection (5) et **en ce que** ce déplacement des moyens de mouillage (5') est lui aussi asservi à une unité de calcul et de commande UCC (de préférence un micro-ordinateur).

## Claims

1. Improved non-electrolytic method for metallizing at least part of the surface of a substrate (hereafter called the surface to be metallized) by spraying, using suitable means, of at least one aqueous and/or organic aerosol containing at least one metal in cationic (oxidizing) form and at least one reducing agent, capable of converting the metallic cation to metal, of the type of those essentially consisting of: -a- optionally sensitizing and/or activating the surface to be metallized, -b- carrying out the metallization spraying according to a succession of at least two spraying phases, alternating with relaxation phases: (i) setting the duration Dp of the spraying phases between $10^{-2}$ and 5 s, preferably between $10^{-1}$ and 3 s for the same unit area, and the duration Dr of the relaxation phases between $10^{-2}$ and 10 s, preferably between $2 \times 10^{-1}$ and 4 s for the same unit area, the durations Dp and Dr of these spraying and relaxation phases being identical to or different from each other, (ii) and adjusting the spraying flow rate(s), such that the Ox / Red electronic ratio is comprised between 0.01 and 15, preferably between 0.5 and 8, and thus allows the formation of a metallic film which is chemically adherent to the substrate; -c- interrupting the spraying as soon as the intended level of metal deposition is reached, **characterized in that** the improvement consists in particular **in that** it is envisaged:

> to implement at least one preliminary stage -$a_p$- of wetting the substrate which involves bringing the latter into contact with at least one wetting fluid, so as to form a fluid film on at least part of its surface;
> and, following the wetting -$a_p$-, to commence the spraying according to stage - b- at the latest 60 s, preferably at the latest 40 s, and, still more preferentially, at the latest 20 s after the end of the wetting.

2. Method according to claim 1, **characterized in that** the durations Dp and Dr of spraying and relaxation respectively are defined on the basis of a constant k of metallization intrinsic to each metal such that k = Dp+Dr, the constant k being preferably comprised between $10^{-1}$ and 13 s and still more preferentially between 0.5 and 9 s.

3. Method according to claim 1 or 2, **characterized in that**:

• at least part of the metallization spraying is carried out dynamically by moving the spraying means with respect to the substrate so as to carry out a periodic sweep of at least 80%, preferably of at least 90%, and, still more preferentially of at least 95% of the surface to be metallized;
• for a given unit area comprised within the sweep zone:

> the spraying phase has a duration Dp corresponding to the duration for which the unit area considered is subjected to the spraying, preferably continuous, of the aerosol,
> the relaxation phase which follows this spraying phase has a duration Dr corresponding to the duration of the remainder of the surface to be metallized by the spraying means,

• the movement of the spraying means is defined such that:

⮞ said spraying means are moved along a path $T_{OA}$ between an point of origin(O) and an arrival point (A) at a spraying movement speed $V_{OA}$,
⮞ at soon as the spraying means reach the point (A), they return to the point (O) at a speed $V_{AO}$ of movement without spraying along a path $T_{AO}$;

$V_{AO}$ being calculated by taking into account the distance between (A) and (O) and $V_{OA}$, so that the duration Dr of the relaxation phase of each unit area of the surface to be metallized swept by the spraying means as well as the constant k intrinsic to the deposited metal is as defined above,
this calculation preferably being carried out by a processing and control unit UCC (preferably a microcomputer) controlling the spraying means and a movement system for said spraying means;
• optionally, during at least part of the metallization spraying, the substrate is rotated.

4. Method according to any one of the previous claims, **characterized in that** the improvement has the following characteristics:

• at least part of the metallization spraying is carried out dynamically by moving the spraying means with respect to the substrate and/or by moving the substrate with respect to the spraying means so as to carry out a periodic sweep of at least 80%, preferably at least 90%, and, still more preferentially at least 95% of the surface to be metallized;
• for a given unit area and comprised within the sweep zone:

⮞ the spraying phase has a duration Dp corresponding to the duration during which the unit area considered is subjected to the spraying, preferably continuous, of the aerosol,
⮞ the relaxation phase which follows this spraying phase has a duration Dr corresponding to the duration of the sweep of the remainder of the surface to be metallized by the spraying means.

• the movement of the substrate with respect to the spraying means being preferably a rotation.

5. Method according to any one of the previous claims, **characterized in that** the duration Dr of the relaxation phase corresponds to the duration for which the unit area considered is not subjected to the spraying of the aerosol.

6. Method according to any one of the previous claims, **characterized in that** the temperature of the metallization enclosure is controlled, this temperature being preferably comprised between 20 and 60°C.

7. Method according to any one of the previous claims, **characterized in that** the preliminary wetting stage -$a_p$- is carried out by spraying of the vapours of wetting liquid and/or of an aerosol of wetting liquid and/or by immersion in a bath of wetting liquid, said wetting liquid being optionally heated.

8. Method according to any one of the previous claims, **characterized in that** the wetting liquid is chosen from the group comprising deionized or non-deionized water, to which at least one anionic, cationic or neutral surfactant is optionally added, an alcoholic solution comprising at least one alcohol (for example isopropanol or ethanol) and mixtures thereof.

9. Method according to any one of claims 3 to 8, **characterized in that** stage b is cyclic, each cycle comprising a spraying phase and a relaxation phase, corresponding to the spraying means moving from (O) to (A) and back and **in that** the total number of N cycles implemented is chosen as a function of the level of deposition of metal finally sought and the level of deposition of metal obtained in each cycle, this total number of N cycles being comprised between 2 and 5000, preferably between 50 and 500, still more preferentially between 80 and 200.

10. Method according to any one of the previous claims, **characterized in that** the substrate is rotated during stage -b-, preferably intermittently, at a speed comprised between 1 and 30 rpm, preferably between 5 and 20 rpm.

11. Method according to any one of claims 3 to 10, **characterized in that** the path $T_{AO}$ is straight and direct.

**12.** Method according to claim 9, **characterized in that** the formula for calculating $V_{AO}$ is as follows:

$$V_{AO} = AO / [k - (OA / V_{OA})]$$

**13.** Method according to claim 12, **characterized in that** $V_{OA}$ is comprised between 0.01 and 20 m/s, preferably between 0.1 and 6 m/s.

**14.** Device for the implementation of the method according to any one of the previous claims, **characterized in that** it comprises:

➢ means (2) for holding the substrate (1) to be metallized, optionally equipped with means (3) for rotation of the substrate (1);
➢ means for preliminary wetting (5') the substrate (1);
➢ means (5) for spraying metal in cationic (oxidizing) form and reducing agent;
➢ optional rinsing means (5");
➢ a system for movement (9) of the spraying means (5), or even of the means of wetting (5') and/or of the means of rinsing (5");
➢ and at least one processing and control unit UCC (preferably a microcomputer) controlling the spraying means (5, 5', 5") and the system for movement (9) of said spraying means (5, 5',5").

**15.** Device according to claim 14 for the implementation of the method according to any one of claims 1 to 13, **characterized in that** it comprises means of wetting (5') by spraying of the liquid, **in that** these wetting means (5') can be moved preferably using the system for movement (9) of the spraying means (5) and **in that** this movement of the wetting means (5') is also controlled by a processing and control unit UCC (preferably a ccomputer).

**Patentansprüche**

**1.** Verbessertes nichtelektrolytisches Verfahren zur Metallisierung zumindest eines Teils einer Oberfläche eines Substrats (im Nachfolgenden als zu metallisierende Oberfläche bezeichnet), durch Spritzen mithilfe von Mitteln, die an mindestens ein wässriges und/oder organisches Aerosol angepasst sind, das mindestens ein Metall in kationischer Form (Oxidationsmittel) und mindestens ein Reduktionsmittel enthält, welches fähig ist, das metallische Kation in ein Metall zu überführen, des Typs der Verfahren bestehend im Wesentlichen aus: -a- gegebenenfalls Sensibilisieren und/oder Aktivieren der zu metallisierenden Oberfläche, -b- Ausfahren des Metallisierungsspritzens gemäß einer Abfolge mindestens zweier Spritzphasen alternierend mit Relaxationsphasen: (i) unter Festlegung der Dauer Dp der Spritzphasen zwischen $10^{-2}$ und 5 s, vorzugsweise zwischen $10^{-1}$ und 3 s, für dieselbe Einheit der Oberfläche, und der Dauer Dr der Relaxationsphasen zwischen $10^{-2}$ und 10 s, vorzugsweise zwischen $2 \times 10^{-1}$ und 4 s, für dieselbe Einheit der Oberfläche, wobei die Dauern Dp und Dr dieser Spritz- und Relaxationsphasen identisch oder zueinander unterschiedlich sind, (ii) und unter Anpassung der Spritzmenge(n) derart, dass das elektronische Verhältnis Ox / Red zwischen 0,01 und 15, vorzugsweise zwischen 0,5 und 8, beträgt, und anschließendes Gestatten der Bildung eines chemisch an dem Substrat haftenden metallischen Films; -c-Unterbrechen des Spritzens ab dem Zeitpunkt, an dem die angestrebte Metallablagerungsrate erreicht ist, **dadurch gekennzeichnet, dass** die Verbesserung namentlich darin besteht, dass vorgesehen ist:

➢ Durchfahren mindestens eines vorherigen Schritts -a$_p$- des Anfeuchtens des Substrats bestehend aus Inkontaktbringen des letzteren mit mindestens einem Anfeuchtungsfluid derart, dass auf zumindest einem Teil seiner Oberfläche ein flüssiger Film gebildet wird;
➢ und anschließend an die Anfeuchtung -a$_p$- Beginnen mit dem Spritzen gemäß Schritt -b- spätestens 60 s, vorzugsweise spätestens 40 s und noch bevorzugter spätestens 20 s nach dem Ende des Anfeuchtens.

**2.** Verfahren gemäß Anspruch 0, **dadurch gekennzeichnet, dass** die Dauern Dp und Dr, bzw. des Spritzens und der Relaxation, ausgehend von einer einem jeden Metall intrinsischen Metallisierungskonstante k derart definiert werden, dass k = Dp + Dr, wobei die Konstante k vorzugsweise zwischen $10^{-1}$ und 13 s, noch bevorzugter zwischen 0,5 und 9 s beträgt.

**3.** Verfahren nach Anspruch 0 oder 2-, **dadurch gekennzeichnet, dass**:

• zumindest ein Teil des Metallisierungsspritzens durch Verrücken der Spritzmittel im Verhältnis zum Substrat derart, dass eine periodische Abtastung von zumindest 80%, vorzugsweise von zumindest 90 % und noch bevorzugter von zumindest 95% der zu metallisierenden Oberfläche bewerkstelligt wird, in dynamischer Weise ausgeführt wird;

• für eine gegebene und in dem Abtastbereich enthaltene Oberflächeneinheit:

➢ die Spritzphase eine Dauer Dp hat, die derjenigen Dauer entspricht, während der diese berücksichtigte Oberflächeneinheit dem vorzugsweise kontinuierlichen Aerosolspritzen unterzogen wird,
➢ die Relaxationsphase, die dieser Spritzphase folgt, eine Dauer Dr hat, die der Dauer der Abtastung des Rests der zu metallisierenden Oberfläche durch die Spritzmittel entspricht,

• das Verrücken der Spritzmittel derart definiert wird, dass:

➢ die besagten Spritzmittel entlang einer Trajektorie $T_{OA}$ zwischen einem Ausgangspunkt (O) und einem Ankunftspunkt (A) mit einer Verrückungsgeschwindigkeit beim Spritzen $V_{OA}$ verrückt werden,
➢ von dem Zeitpunkt, an dem die Spritzmittel den Punkt (A) erreichen, sie wieder zum Punkt (O) entlang einer Trajektorie $T_{AO}$ mit einer Verrückungsgeschwindigkeit ohne Spritzen $V_{AO}$ zurückkehren;
wobei $V_{AO}$ unter Berücksichtigung des Abstands zwischen (A) und (O) und von $V_{OA}$ berechnet wird, damit die Dauer Dr der Relaxationsphase einer jeden Oberflächeneinheit der durch die Spritzmittel abgetasteten zu metallisierenden Oberfläche sowie die dem abzulagernden Metall intrinsische Konstante k wie oben definiert ist,
wobei diese Berechnung vorzugsweise durch eine Rechen- und Steuerungseinheit UCC (vorzugsweise einen Personalcomputer) erfüllt wird, der die Spritzmittel und ein System zum Verrücken der besagten Spritzmittel unterworfen sind;

• das Substrat gegebenenfalls während zumindest eines Teils des Metallisierungsspritzens in Rotation gebracht wird.

4. Verfahren gemäß einem der vorherigen Ansprüche, **dadurch gekennzeichnet, dass** die Verbesserung die nachfolgenden Merkmale aufweist:

• zumindest ein Teil des Metallisierungsspritzens wird durch Verrücken der Spritzmittel im Verhältnis zum Substrat und/oder durch Verrücken des Substrats im Verhältnis zu den Spritzmitteln derart, dass eine periodische Abtastung von zumindest 80%, vorzugsweise von zumindest 90% und noch bevorzugter von zumindest 95% der zu metallisierenden Oberfläche bewerkstelligt wird, in dynamischer Weise ausgeführt;
• für eine gegebene und in dem Abtastbereich enthaltene Oberflächeneinheit:

➢ die Spritzphase eine Dauer Dp hat, die derjenigen Dauer entspricht, während der diese berücksichtigte Oberflächeneinheit dem vorzugsweise kontinuierlichen Aerosolspritzen unterzogen wird,
➢ die Relaxationsphase, die dieser Spritzphase folgt, eine Dauer Dr hat, die der Dauer der Abtastung des Rests der zu metallisierenden Oberfläche durch die Spritzmittel entspricht.

• das Verrücken des Substrats im Verhältnis zu den Spritzmitteln vorzugsweise eine Rotation ist.

5. Verfahren gemäß einem der vorherigen Ansprüche, **dadurch gekennzeichnet, dass** die Dauer Dr der Relaxationsphase derjenigen Dauer entspricht, während der die berücksichtigte Oberflächeneinheit keinem Aerosolspritzen unterworfen wird.

6. Verfahren gemäß einem der vorherigen Ansprüche, **dadurch gekennzeichnet, dass** die Temperatur des abgeschlossenen Metallisierungsbereichs kontrolliert wird, wobei diese Temperatur vorzugsweise zwischen 20 und 60˚C beträgt.

7. Verfahren gemäß einem der vorherigen Ansprüche, **dadurch gekennzeichnet, dass** der vorherige Schritt -$a_p$- des Anfeuchtens durch Spritzen von Dämpfen einer Anfeuchtungsflüssigkeit und/oder eines Aerosols einer Anfeuchtungsflüssigkeit und/oder durch Eintauchen in ein Bad aus Anfeuchtungsflüssigkeit verwirklicht wird, wobei die besagte Anfeuchtungsflüssigkeit gegebenenfalls erwärmt wird.

8. Verfahren gemäß einem der vorherigen Ansprüche, **dadurch gekennzeichnet, dass** die Anfeuchtungsflüssigkeit ausgewählt ist aus der Gruppe umfassend deionisiertes oder nicht deionisiertes Wasser, dem gegebenenfalls mindestens ein anionisches, kationisches oder neutrales Tensid zugesetzt ist, eine mindestens einen Alkohol (beispielsweise Isopropanol oder Ethanol) enthaltende alkoholische Lösung und deren Mischungen.

9.  Verfahren gemäß einem der Ansprüche 3- bis 8-, **dadurch gekennzeichnet, dass** der Schritt b zyklisch ist, wobei jeder Zyklus eine Spritzphase und eine Relaxationsphase umfasst, was einem Hin-/Rückbewegen der Spritzmittel zwischen (O) und (A) entspricht, und dass die Gesamtzahl von N durchgeführten Zyklen als Funktion der letztlich angestrebten Metallablagerungsrate und der in jedem Zyklus erreichten Metallablagerungsrate ausgewählt wird, wobei diese Gesamtzahl von N Zyklen zwischen 2 und 5000, vorzugsweise zwischen 50 und 500 und noch bevorzugter zwischen 80 und 200 beträgt.

10. Verfahren gemäß einem der vorherigen Ansprüche, **dadurch gekennzeichnet, dass** das Substrat im Schritt -b- mit einer zwischen 1 und 30 tr/min, vorzugsweise zwischen 5 und 20 tr/min, betragenden Geschwindigkeit in Rotation versetzt wird, vorzugsweise in intermittierender Weise.

11. Verfahren gemäß einem der Ansprüche 3- bis 10-, **dadurch gekennzeichnet, dass** die Trajektorie $T_{AO}$ geradlinig und direkt ist.

12. Verfahren gemäß Anspruch 9-, **dadurch gekennzeichnet, dass** die Formel zur Berechnung von $V_{AO}$ die folgende ist:

$$V_{AO} = AO \, / \, [k - (OA \, / \, V_{OA})]$$

13. Verfahren gemäß Anspruch 12-, **dadurch gekennzeichnet, dass** $V_{OA}$ zwischen 0,01 und 20 m/s, vorzugsweise zwischen 0,1 und 6 m/s beträgt.

14. Vorrichtung zur Durchführung des Verfahrens gemäß einem der vorherigen Ansprüche, **dadurch gekennzeichnet, dass** es umfasst:

➢ Mittel zum Halten (2) des zu metallisierenden Substrats (1), gegebenenfalls ausgestattet mit Mitteln zum Inrotationbringen (3) des Substrats (1);
➢ Mittel zum vorherigen Anfeuchten (5') des Substrats (1);
➢ Mittel zum Spritzen (5) von Metall in kationischer Form (Oxidationsmittel) und des Reduktionsmittels;
➢ eventuell Mittel zum Spülen (5");
➢ ein System zum Verrücken (9) der Spritzmittel (5), sogar der Mittel zum Anfeuchten (5') und/oder der Mittel zum Spülen (5");
➢ und zumindest eine Rechen- und Steuerungseinheit UCC (vorzugsweise einen Personalcomputer), der die Spritzmittel (5, 5', 5") und das System zum Verrücken (9) der besagten Spritzmittel (5, 5', 5") unterworfen sind.

15. Vorrichtung gemäß Anspruch 14- zur Durchführung des Verfahrens gemäß einem der Ansprüche 0 bis 13-, **dadurch gekennzeichnet, dass** es Mittel zum Anfeuchten (5') durch Spritzen einer Flüssigkeit umfasst, dass diese Mittel zum Anfeuchten (5') vorzugsweise mithilfe des Systems zum Verrücken (9) der Spritzmittel (5) verrückbar sind und dass dieses Verrücken der Mittel zum Anfeuchten (5') auch einer Rechen- und Steuerungseinheit UCC (vorzugsweise einem Personalcomputer) unterworfen ist.

FIG.1.

FIG.2.

# FIG.3.

| | | |
|---|---|---|
| ZONE 1 | ZONE 2 | ZONE 3 |

FIG.4A.

FIG.4B.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5492613 B
- US 6268016 B1
- FR 2763962 B

**Littérature non-brevet citée dans la description**

- Metal Finishing Guidebook and Directory Issue. Metal Finishing publication, 1996, 354, 356, 357
- **H. Narcus.** Metallizing of Plastics. Reinhold Publishing Corporation, 1960
- **F. Lowenheim.** Modern electroplating. John Wiley & Sons publication, 1974, 636